# EUROPÄISCHE PATENTSCHRIFT

(11) **EP 2 570 305 B1**
(45) Veröffentlichungstag und Bekanntmachung des Hinweises auf die Patenterteilung: **23.04.2014**
(21) Anmeldenummer: 12008249.0
(22) Anmeldetag: 30.11.2010
(51) Int. Cl.: B60R 9/06, B60R 9/10

(54) **Lastenträger mit einem Schlitten und einem Schlittenantrieb**
Load holder with a carriage and a carriage drive
Support de charges doté d'un chariot et d'un entraînement de chariot

(30) Priorität: 09.12.2009 DE 102009057651
(43) Veröffentlichungstag der Anmeldung: 20.03.2013
(62) Teilanmeldung aus: 10400060.9
(73) Patentinhaber: WESTFALIA - Automotive GmbH, 33378 Rheda-Wiedenbrück (DE)
(72) Erfinder: Hermbusch, Gerhard, 33449 Langenberg (DE); Wyrwich, Martin, 33378 Rheda-Wiedenbrück (DE)
(74) Vertreter: Bregenzer, Michael

(56) Entgegenhaltungen:
- EP-A2- 1 225 067
- WO-A2-2006/093779
- FR-A- 991 371
- JP-A- 8 175 275
- US-A- 5 564 767
- US-A1- 2003 136 595
- US-A1- 2003 141 733
- US-B1- 6 503 036
- US-B1- 6 505 873
- US-B1- 6 702 353
- US-B1- 6 991 277

## Beschreibung

Die Erfindung betrifft einen Lastenträger für ein Fahrzeug, insbesondere einen Personenkraftwagen, mit einer Schlitten-Führungsbasis zur Montage an einer Lastenträgeraufnahme des Fahrzeugs gemäß dem Oberbegriff des Anspruchs.

Ein derartiger Lastenträger ist z.B. in FR 991 371 A erläutert.

Lastenträger, die in der Art einer Schublade aus dem Heck eines Kraftfahrzeuges ausfahrbar sind, sind bekannt. Beispielsweise hat die Schlitten-Führungsbasis Führungsschienen, an denen Läuferschienen schiebebeweglich, d.h. längsbeweglich, gelagert sind. Ein solcher Lastenträger geht beispielsweise aus der nicht vorveröffentlichten DE 10 2009 022 622 hervor, wobei zum Halten und Verspannen des Schlittens manuell betätigbare Halteeinrichtungen vorgesehen sind.

Ferner wird der Schlitten von Hand verstellt, was in der Praxis recht unbequem ist.

Es ist daher die Aufgabe der vorliegenden Erfindung, einen bequemer handhabbaren Lastenträger, der einen Schlittenauszug aufweist, bereitzustellen.

Zur Lösung der Aufgabe ist ein Lastenträger gemäß der technischen Lehre des Anspruchs 1 vorgesehen.

Der Lastenträger kann aufgrund des Schlittenantriebes bequem verstellt werden. Ein manuelles Ergreifen ist nicht notwendig. Dadurch ist die Bedienung und Handhabung sehr bequem.

Weiterhin kann vorteilhaft ein Getriebe vorgesehen sein, beispielsweise ein selbsthemmendes Getriebe. Dadurch ist es beispielsweise möglich, dass der Schlitten die durch den Schlittenantrieb angefahrene Position exakt einhält, wobei keine zusätzliche Halteeinrichtung erforderlich ist.

Es kann zweckmäßigerweise vorgesehen sein, dass sich der Schlitten in einer der Endstellungen, d.h. der Ruhestellung und/oder der Gebrauchsstellung, an einem Anschlag befindet bzw. durch den Schlittenantrieb an den Anschlag gefahren wird, so dass er dort ortsfest gehalten ist. Die Schlitten-Führungsbasis hat z.B. mindestens einen Anschlag. Vorteilhaft ist der Gebrauchsstellung und der Ruhestellung mindestens ein Anschlag zugeordnet.

Es kann vorteilhaft im Bereich des Anschlages eine Keilflächenanordnung und/oder eine Verriegelungsanordnung vorgesehen sein, d.h. dass beispielsweise der Schlitten auf eine Keilfläche aufläuft oder mit einer Keilfläche versehen ist, die auf eine entsprechende Gegenfläche oder Gegenkontur aufläuft, so dass sich der Schlitten sozusagen in der Endposition verkeilt. Dies ist insbesondere für einen spielfreien Fahrbetrieb des Fahrzeuges vorteilhaft. Die Verriegelungsanordnung kann z.B. vorsehen, dass der Schlitten und der Anschlag mit einer Kombination aus Riegel (n) und Riegelaufnahm(en) versehen sind, so dass ein beispielsweise am Schlitten vorgesehener Riegelvorsprung in die Riegelaufnahme am Anschlag eingreift oder umgekehrt.

Zum Antrieb des Schlittens eignen sich verschiedene Konzepte.

Eine erste Ausführungsform kann beispielsweise einen fluidtechnischen Antrieb, z.B. einen Pneumatikzylinder oder einen Druckzylinder umfassend, vorsehen. Der Zylinder beaufschlagt den Schlitten zumindest in einer Richtung, d.h. beispielsweise in die Gebrauchsstellung. In die umgekehrte Richtung kann ein manuelles Bedienkonzept notwendig sein, d.h. der Zylinder wird drucklos gehalten, wobei der Bediener den Schlitten mit manueller Kraft in Richtung der Schlitten-Führungsbasis bzw. in die Lastenträgeraufnahme des Fahrzeuges verschiebt. Selbstverständlich ist ein doppelt wirkendes Prinzip vorteilhaft, d.h. dass der fluidtechnische Antrieb den Schlitten sowohl in die Ruhestellung als auch in die Gebrauchsstellung verfahren kann.

Besonders bevorzugt ist ein elektromotorisches Antriebsprinzip. D.h. der Schlittenantrieb enthält einen oder mehrere Elektromotoren, wobei auch mindestens ein elektro-magnetischer Antrieb möglich ist. Zwar wäre es prinzipiell auch möglich, dass der Schlitten mit einem Linearantrieb versehen ist. Bevorzugt ist jedoch ein Drehantrieb, wobei die Drehbewegung durch ein entsprechendes Übertragungsgetriebe in eine Linearbewegung des Schlittens übertragen wird.

Bevorzugt ist beispielsweise eine Zahnschienenanordnung. Man kann beispielsweise Zahnschienen an Läuferschienen des Schlittens anbringen, mit denen Ritzel des motorischen Schlittenantriebes kämmen.

Es versteht sich, dass auch ein Übersetzungsgetriebe, d.h. beispielsweise ein Zahngetriebe oder dergleichen mehr, bei dem Schlittenantrieb vorteilhaft ist. So ist es beispielsweise möglich, dass der Motor des Schlittenantriebs verhältnismäßig schnell dreht, der Schlitten aber langsam verfährt. Dies ist insbesondere im Sinne der Bediensicherheit. Weiterhin sind die Ströme, die der Motor dann verbraucht, verhältnismäßig gering, so dass das Bordnetz des Kraftfahrzeuges nicht übergebühr beansprucht wird.

Es versteht sich, dass auch andere Getriebearten möglich sind: Beispielsweise könnte ein Seilzuggetriebe vorgesehen sein, um den Schlitten zwischen der Ruhe- und der Gebrauchsstellung zu verfahren. Weiterhin sind auch Kettengetriebe möglich.

Bevorzugt greift der Schlitteriantrieb zentral bzw. mittig am Schlitten an. Beispielsweise ist der Schlittenantrieb in einer Quermitte des Schlittens mit diesem verbunden. Wenn der Schlitten Läuferschienen aufweist, greift der Schlittenantrieb zweckmäßigerweise an beiden der Läuferschienen an. Beispielsweise sind an beiden Läuferschienen Zahnungen vorhanden, mit denen jeweils Ritzel des Schlittenantriebs kämmen. Auf diesem Wege wird erreicht, dass sich der Schlitten beim Verfahren bezüglich der Schlitten-Führungsbasis nicht verkantet.

Es ist aber auch möglich, dass der Schlitten mit Rollen oder Gleitern versehen ist, die beispielsweise an Führungsschienen entlang rollen oder gleiten können. Die Führungsschienen sind fahrzeugfest montiert, der Schlitten relativ dazu beweglich.

Selbstverständlich können Führungsschienen auch einen gekrümmten Verlauf haben dergestalt, dass der Schlitten beispielsweise eine Bewegung nach hinten oben oder unten, zur Seite oder dergleichen, durchläuft oder durchfährt, wenn er aus dem Heck des Kraftfahrzeuges ausgefahren wird.

Wenn beispielsweise Rollen am Schlitten vorhanden sind, die auf Führungsschienen oder Kurvenflächen abrollen, die fahrzeugfest sind, ist es zweckmäßig, dass Rollen an einander entgegengesetzten Seiten des Schlittens angetrieben werden, was einem möglichen Verkanten entgegenwirkt. In diesem Sinne kann es auch sein, wenn der Schlitten beispielsweise quer zur Bewegungsachse einander entgegengesetzten Seiten angetrieben wird (gezogen oder geschoben).

Führungsschienen zum Führen des Schlittens können einen linearen Verlauf aufweisen und/oder gekrümmt sein, z.B. an aufeinander folgenden Abschnitten.

Weiterhin ist es möglich, dass der Schlitten und/oder der Schlittenantrieb teleskopierbar sind. Somit kann beispielsweise der Schlitten teleskopartig aus dem Heck des Fahrzeuges ausfahren, so dass er in der eingefahrenen Position kompakt ist, in der ausgefahrenen Position jedoch einen großen Ladebereich zum Beladen mit einer Last bereitstellt.

Beim teleskopierbaren Linearantrieb oder Schlittenantrieb ist es ebenfalls zweckmäßig, wenn er in der eingefahrenen Position relativ kurz baut, in der ausgefahrenen Position jedoch recht lang ist, d.h. dass er einen langen Verstellweg des Schlittens relativ zur Schlitten-Führungsbasis ermöglicht.

Der Schlittenantriebsschalter, der zweckmäßigerweise einen Bestandteil des Lastenträgers oder einer den Lastenträger umfassenden Lastenträgeranordnung bildet, ist verhältnismäßig frei positionierbar, z.B. im Innenraum des Kraftfahrzeuges. Es genügt eine fluidtechnische oder elektrische Leitung zum Schlittenantriebsschalter.

Erfindungsgemäß ist bei dem Lastenträger eine mindestens ein Halteglied aufweisende Halteeinrichtung, die in einer Haltestellung den Schlitten in mindestens einer Stellung bezüglich der Schlitten-Führungsbasis hält und in einer Freigabestellung den Schlitten zu einer Verstellung bezüglich der Schlit-ten-Führungsbasis freigibt, vorgesehen. Die Halteeinrichtung weist einen mit einem Schlittenantriebsschalter und/oder dem Halteantriebsschalter schaltbaren elektrischen oder fluidischen Halteantrieb zum Verstellen des mindestens einen Halteglieds in die Haltestellung und/oder die Freigabestellung auf.

Der Halteantrieb kann beispielsweise zum Verstellen des Halteglieds in die Haltestellung und/oder auch die Freigabestellung vorgesehen sein. So ist es beispielsweise möglich, dass das mindestens eine Halteglied durch eine Federanordnung in die Haltestellung federbelastet ist. In die Gegenrichtung, d.h. in die Freigabestellung, wirkt nunmehr der erfindungsgemäße Halteantrieb. Es ist auch möglich, dass das Halteglied durch eine Federanordnung in die Freigabestellung belastet ist und der Halteantrieb das Halteglied in die Haltestellung antreibt.

Der Schlittenantrieb oder der Halteantrieb können z.B. einen Elektromagneten, einen Elektromotor und/oder einen fluidtechnischen Motor, z.B. pneumatischen Motor umfassen.

Weiter können der der Schlittenantrieb, wie erwähnt, über ein Getriebe auf den Schlitten oder der Halteantrieb über ein Getriebe auf das Halteglied wirken, das auch zweckmäßigerweise einen Bestandteil des Schlittenantriebs oder des Halteantriebs bilden kann. Das Getriebe umfasst z.B. ein Zahngetriebe, ein Keilgetriebe oder dergleichen. Das Getriebe ist zweckmäßigerweise selbsthemmend, z.B. aufgrund einer passenden Schrägneigung einer Keilschräge und/oder mittels eines selbsthemmenden Spindeltriebs oder dergleichen.

Das Halteglied kann in einer bevorzugten Ausführungsform einen Riegel umfassen. Die Halteeinrichtung könnte man dann auch als Verriegelungseinrichtung bezeichnen. Es versteht sich, dass auch mehrere Riegel vorgesehen sein können.

Eine weitere Variante der Erfindung sieht vor, dass das Halteglied ein Formschlussglied umfasst, das zu einem Formschluss mit einer Formschlussgegenkontur, beispielsweise am Schlitten, ausgestaltet ist. Wenn das Formschlussglied formschlüssig in die Formschlussgegenkontur eingreift bzw. mit dieser in formschlüssigem Eingriff ist, wird dadurch der Halt des Schlittens relativ zur Schlitten-Führungsbasis bewirkt.

Aber auch ein Verklemmen oder Verspannen des Schlittens durch die Halteeinrichtung ist möglich, so dass dieser bezüglich der Schlitten-Führungsbasis verspannt bzw. verklemmt ist. In diesem Fall umfasst das Halteglied beispielsweise ein Spannelement.

Die Schlitten-Führungsbasis umfasst zweckmäßigerweise Führungsschienen, an denen Läuferschienen des Schlittens geführt sind.

Das Halteglied, beispielsweise der Riegel oder das Formschlussglied, greift vorteilhaft in der Haltestellung in die Führungsschienen und/oder die Läuferschienen ein. Wenn sowohl die Führungs- als auch die Läuferschienen durchgriffen sind, wird dadurch ein besonders fester relativer Halt des Schlittens bezüglich der Schlitten-Führungsbasis erzielt. Es ist aber auch möglich, dass das Halteglied einen Längsanschlag für eine oder beide der Läuferschienen bildet.

Bevorzugt ist eine Steuerung für den Schlittenantrieb und/oder den Halteantrieb vorgesehen.

Die Steuerung kann beispielsweise so ausgestaltet sein, dass sie den Schlittenantrieb und/oder den Halteantrieb periodisch wiederholt mit Energie versorgt, beispielsweise bestromt oder fluidtechnisch ansteuert, wobei diese Energieversorgung von einer vorigen Betätigung durch den Schlittenantriebsschalter und/oder den Halteantriebsschalter abhängt.

Für den Schlittenantrieb und für den Halteantrieb können jeweils separate Schalter, d.h. ein Halteantriebsschalter und ein Schlittenantriebsschalter, vorhanden sein. Es ist aber auch möglich, dass ein und derselbe Antriebsschalter beide Antriebe, nämlich den Halteantrieb und den Schlittenantrieb schaltet. Bevorzugt ist dabei eine Schaltsequenz, d.h. dass zunächst der Halteantrieb betätigt wird, um den Schlitten zu entriegeln bzw. freizugeben, und anschließend der Schlittenantrieb, um den Schlitten bezüglich der Führungsbasis zu verfahren. Diese sequenzielle Schaltung kann beispielsweise durch einen entsprechend stufigen Antriebsschalter realisiert sein. Es ist aber auch eine Ablaufsteuerung möglich, die vorteilhaft in der nachfolgend noch näher beschriebenen Steuerung integriert sein kann. Es versteht sich, dass beim Verriegeln bzw. beim Erreichen der Endposition eine umgekehrte Betätigung zweckmäßig ist, d.h. dass zunächst der Schlittenantrieb abschaltet, bevor der Halteantrieb den Schlitten in der jeweiligen Längsposition festlegt.

An diese Stelle sei bemerkt, dass der Schlitten selbstverständlich mehrere Gebrauchspositionen haben kann, bei denen er unterschiedlich weit vor das Heck des Fahrzeuges vorsteht. Wenn also nur eine verhältnismäßig kompakte Last aufgelegt werden soll, kann der Schlitten auch weniger weit vor das Heck des Fahrzeuges vorfahren.

Weiterhin sei festgehalten, dass die Halteeinrichtung zwar eine Option darstellt, jedoch nicht zwingend notwendig ist. Wie gesagt, kann bereits der Schlittenantrieb ein ortsfestes Halten des Schlittens an der jeweiligen Längsposition, beispielsweise der Gebrauchsstellung oder der Ruhestellung, gewährleisten, insbesondere dann, wenn der Schlitten auf einen Anschlag und/oder eine Keilfläche gefahren wird.

Wird also z.B. der Schlittenantrieb durch den Schlittenantriebsschalter in Richtung der Ruhe- oder der Gebrauchsstellung und/oder der Halteantrieb durch den Halteantriebsschalter in Richtung der Haltestellung betätigt, taktet die Steuerung sozusagen nach und beaufschlagt den Schlittenantrieb immer wieder in Richtung der Ruhe- oder der Gebrauchsstellung bzw. den Halteantrieb immer wieder in Richtung der Haltestellung. Dadurch wird einem unbeabsichtigten Lösen des Halteglieds vorgebeugt. Auch das umgekehrte ist möglich, dass nämlich die Steuerung den Halteantrieb in Richtung der Freigabestellung periodisch mit Energie versorgt, wenn zuvor von einem Bediener der Befehl zum Schalten in Richtung der Freigabestellung gegeben worden ist.

Der Schlittenantriebsschalter und/oder der Halteantriebsschalter kann aufgrund der Erfindung beliebig positioniert werden, beispielsweise im Innenraum des Kraftfahrzeuges, insbesondere im Cockpit, in einem Gepäckabteil oder dergleichen. Bevorzugt ist die Anordnung des Schlittenantriebsschalters und/oder des Halteantriebsschalters in einem Außenbereich des Fahrzeugs. Dazu ist der Schlittenantriebsschalter und/oder der Halteantriebsschalter beispielsweise in einer passenden elektrischen Schutzart ausgestaltet, weist insbesondere einen Spritzwasserschutz auf, z.B. mit Schutzart IP 44.

Bei der Anordnung im Außenbereich ist es vorteilhaft, wenn der Schlittenantriebsschalter und/oder der Halteantriebsschalter am Schlitten, beispielsweise hinter oder an einem Kennzeichenträger des Schlittens, angeordnet ist. Weiterhin ist es möglich, dass der Schlittenantriebsschalter und/oder der Halteantriebsschalter eine Halterung zur Befestigung am Heck des Fahrzeugs aufweist oder zur Befestigung am Heck des Kraftfahrzeuges ausgestaltet ist. Diese Anordnung hat den großen Vorteil, dass der Bediener zugleich den Schlittenantriebsschalter und/oder den Halteantriebsschalter betätigen kann und den Schlitten in einem Greifbereich hat.

Die Halterung bildet beispielsweise einen Bestandteil eines Heckstoßfängers des Kraftfahrzeuges oder ist für die Anordnung am Heckstoßfänger ausgestaltet. Es versteht sich, dass die Halterung bzw. der Schlittenantriebsschalter und/oder der Halteantriebsschalter auch hinter einem Heckstoßfänger, d.h. beim normalen Gebrauch des Fahrzeuges unsichtbar und vor Verschmutzung geschützt, anordenbar sein kann.

In diesem Zusammenhang sei erwähnt, dass die Anordnung eines Betätigungselements - bei der Erfindung des Halteantriebsschalters - im Heckbereich nahe beim Schlitten auch bei einer mechanisch betätigbaren Halteeinrichtung eines Lastenträgers gemäß dem Oberbegriff des Anspruches 1 eine eigenständige Erfindung darstellt. Zwischen dem so angeordneten "mechanischen" Betätigungselement und der mechanisch betätigbaren Halteeinrichtung ist zweckmäßigerweise ein Übertragungsglied, z.B. ein Bowdenzug, angeordnet.

Bevorzugt ist es, wenn der Lastenträger einen Empfänger zur drahtlosen Ansteuerung des Schlittenantriebsschalters und/oder des Halteantriebsschalters aufweist. Somit kann also der Schlittenantriebsschalter und/oder der Halteantriebsschalter drahtlos angesteuert werden, z.B. mit einer Fernbedienung, die ansonsten zur Verriegelung oder zum Öffnen des Fahrzeuges (Zentralverriegelung) vorgesehen ist.

Bevorzugt hat der Empfänger einen sehr kurzen, begrenzten Empfangsbereich. Dieser kann beispielsweise nur 50 bis 200cm betragen. Bevorzugt ist der Empfänger zur Anordnung am Heck des Kraftfahrzeuges ausgestaltet bzw. vorgesehen. Der Empfänger kann auch unmittelbar am Schlitten angeordnet sein. Alle vorgenannten Maßnahmen haben den Vorteil, dass die Halteeinrichtung nur dann in die Freigabestellung verstellt werden kann, wenn sich ein Bediener in der Nähe des Schlittens befindet. Auch dies hat den Vorteil, dass der Schlitten nicht unkontrolliert aus der Lastenträgeraufnahme ausfahren kann, z.B. wenn das Fahrzeug hangabwärts steht.

Das "Fernsteuerungsprinzip" bzw. elektrische oder fluidische Antriebsprinzip für die erfindungsgemäße Halteeinrichtung ermöglicht auch eine optimale Einbindung in ein Sicherheits- und Überwachungskonzept eines jeweiligen Fahrzeuges. Auch dies ermöglicht es, dass der Lastenträger beispielsweise nicht während der Fahrt des Fahrzeuges betätigt werden kann. In der Praxis realisiert man dies bislang dadurch, dass ein Betätigungselement für eine mechanische Betätigung der Halteeinrichtung im Gepäckabteil des Kraftfahrzeuges angeordnet ist, das in der Regel beim Fahrbetrieb des Fahrzeuges nicht zugänglich ist.

Der erfindungsgemäße Schlittenantrieb oder Halteantrieb ermöglicht jedoch, dass auch an anderer Stelle, beispielsweise im Cockpit des Fahrzeuges, der Schlittenantriebsschalter und/oder der Halteantriebsschalter oder ein Betätigungselement desselben angeordnet sein kann, ohne dass die Gefahr einer Fehlbedienung besteht.

So hat der Lastenträger beispielsweise eine Steuerung zur Aktivschaltung und/oder Deaktivierung des Schlittenantriebs, des Halteantriebs oder auch des Schlitten- und/oder des Halteantriebsschalters anhand mindestens einer Aktivierungsbedingung, die man im Falle der Deaktivierung auch als Deaktivierungsbedingung bezeichnen kann.

Die Steuerung kann so ausgestaltet sein, dass sie den Schlittenantriebsschalter und/oder den Schlittenantrieb und/oder den Halteantriebsschalter oder den Halteantrieb anhand der mindestens einen Aktivierungsbedingung für ein Zeitintervall aktiv schaltet oder deaktiviert. Somit ist es beispielsweise nur während dieses aktiven Zeitintervalls möglich, dass ein Bediener den Schlittenantriebsschalter und/oder den Halteantriebsschalter betätigt, der beispielsweise im Heckbereich des Fahrzeuges angeordnet ist.

Vorzugsweise umfasst die Steuerung zur Betätigung des elektrischen Schlittenantriebsschalter und/oder den Halteantriebsschalters ein Betätigungselement mit einem in einem Außenbereich des Fahrzeugs angeordneten Bedienbereich nahe bei dem Lastenträger. Somit ist das Betätigungselement nahe beim Lastenträger bedienbar, so dass der Bediener beispielsweise gleichzeitig den Lastenträger ergreifen und den Schlittenantriebsschalter und/oder den Halteantriebsschalter betätigen kann.

Die Steuerung umfasst weiterhin zweckmäßigerweise einen Sensoreingang und/oder einen Sensor und ist zur Auswertung eines Sensorsignals des Sensors als Aktivierungsbedingung ausgeschaltet.

Der Sensor kann beispielsweise ein Sensor einer Abstandskontrolleinrichtung (PDC / Park Distance Control) sein. Wenn also beispielsweise unmittelbar hinter dem Heck des Fahrzeuges eine Person oder ein sonstiges Hindernis steht, kann dies die Steuerung als Aktivierungsbedingung auswerten und beispielsweise ein Verstellen des Halteantriebs in Richtung der Freigabestellung oder des Schlittenantriebs in die Gebrauchsstellung verhindern.

Eine weitere Aktivierungsbedingung, die die Steuerung zweckmäßigerweise auswertet, ist das Unterschreiten einer Grenzgeschwindigkeit des Fahrzeuges. Wenn dieses beispielsweise mit einer Grenzgeschwindigkeit von beispielsweise maximal 5 bis 10km/h, vorzugsweise 2 bis 5km/h, rollt, darf der Schlitten durch den Schlittenantrieb verfahren und/oder darf die Halteeinrichtung betätigt werden, d.h. der Halteantrieb kann das Halteglied in die Haltestellung oder die Freigabestellung verstellen. Wenn das Fahrzeug schneller fährt, ist dies nicht möglich. Es kann aber auch vorgesehen sein, dass das Fahrzeug vollständig still stehen muss, um den Schlittenantrieb und/oder den Halteantrieb betätigen zu können.

Eine weitere Aktivierungsbedingung kann auch der Stillstand eines Fahrzeug-Motors des Fahrzeugs sein, so dass beispielsweise bei laufendem Motor ein Betätigen des Schlittenantriebs und/oder des Halteantriebes nicht möglich ist.

Weitere Aktivierungsbedingungen können sein:
- Eine Zentralverriegelung des Kraftfahrzeuges signalisiert "Fahrzeugtüren entriegelt"
- Schlüssel ist aus dem Zündschloss des Kraftfahrzeuges entfernt
- Motor ist aus, beispielsweise Klemme 15 aus,
- Klemme 15 ein, Kraftfahrzeug ist betriebsbereit
- oder eine sonstige Stellung des Motorstartschalters.

Eine vorteilhafte Ausgestaltung der Erfindung sieht vor, dass die mindestens eine Aktivierungsbedingung ein von einem Freigabeschalter sendbares Freigabesignal ist oder umfasst. Der Freigabeschalter ist beispielsweise im Innenraum des Fahrzeugs, beispielsweise im Cockpit desselben, im Gepäckabteil, vorzugsweise geschützt durch einen Deckel, oder an anderer Stelle des Fahrzeuges angeordnet. Der Freigabeschalter kann aber auch einen an einem Fahrzeugschlüssel für das Fahrzeug oder an einem am Schlüsselanhängergehäuse angeordneten Sender umfassen und der Lastenträger einen zugeordneten Funkempfänger zum Empfang des Freigabesignals.

Somit kann beispielsweise durch Betätigung des Freigabeschalters im Schlüssel das Zeitintervall durch den Bediener des Fahrzeuges gegeben werden, worauf dann das Zeitintervall zur Betätigung des Schlittenantriebsschalters und/oder des Halteantriebsschalters beginnt. Der Sender ist beispielsweise in einem Fahrzeugschlüsselgehäuse, insbesondere dessen Griff, angeordnet.

Die mindestens eine Aktivierungsbedingung kann auch eine Funktionsstellung eines Motorschalters zum Starten eines Fahrzeug-Motors des Fahrzeugs umfassen. Die Funktionsstellung ist beispielsweise eine Betriebsbereitschaft des Fahrzeuges, zum Beispiel ein Signal "Klemme 15 ein". Das Signal kann beispielsweise das geschaltete Plus am Zündstartschalter sein ("Klemme 15") oder auch die sogenannte Zündschloss-Radiostellung ("Klemme 15r").

Es ist aber auch der gerade umgekehrte Fall möglich, dass nämlich die mindestens eine Aktivierungsbedingung eine Funktionsstellung "Motor aus", zum Beispiel "Klemme 15", des Motorstartschalters umfasst. Somit ist also eine der Aktivierungsbedingungen jedenfalls so getroffen, dass zu der Aktivierung des Schlittenantriebsschalters und/oder des Halteantriebsschalters und/oder zum Auslösen des Zeitintervalls der Motor ausgeschaltet wird oder ist. Die Aktivierungsbedingung kann beispielsweise auch ein Zustandswechsel "Motor ein - Motor aus" sein, so dass beispielsweise nach Abstellen des Fahrzeuges die Halteeinrichtung betätigbar ist, z.B. in die Freigabestellung verstellbar ist und/oder das Zeitintervall zum Betätigen Lösen der Halteeinrichtung beginnt und der Bediener den Schlitten des Lastenträgers beispielsweise nach Betätigen des Schlittenantriebsschalters und/oder des Halteantriebsschalters und Entriegeln der Halteeinrichtung verstellen kann. Ein Zeitintervall, innerhalb dessen die Halteeinrichtung betätigbar ist, ist in dieser Situation vorzugsweise so bemessen, dass der Bediener zwar bequem zum Heck des Fahrzeuges gehen und dort den Lastenträger in die Ruhestellung oder die Gebrauchsstellung verstellen kann. Dann endet das Zeitintervall jedoch, so dass eine Fehlmanipulation des Lastenträgers verhindert wird.

Die mindestens eine Aktivierungsbedingung kann auch eine Bestromung einer Leuchte des Fahrzeugs, insbesondere einer am Heck des Fahrzeugs angeordneten Leuchte, und/oder eine am Lastenträger angeordnete Leuchte umfassen. Die Heckleuchte ist beispielsweise eine Nebelschlussleuchte, ein Rückfahrscheinwerfer, eine Blinkleuchte des Fahrzeugs oder des Lastenträgers oder dergleichen. Wenn die erfindungsgemäße Steuerung auf der Basis des Heckleuchtensignals arbeitet, sind nur kurze Kabelwege erforderlich, was z.B. kostengünstig ist.

Eine Variante der Erfindung kann vorsehen, dass die Leuchte eine Leuchte des Lastenträgers ist, deren Bestromung eine Aktivierungsbedingung für die erfindungsgemäße Steuerung bildet. So könnte die Steuerung beispielsweise mit einer Stromversorgungsleitung für mindestens eine dieser lastenträgerseitigen Leuchten verbunden sein, beispielsweise mit der zum Lastenträger führenden Versorgungsleitung. Diese Variante ist aufgrund einer kurzen Leitungsführung vorteilhaft.

Besonders bevorzugt ist jedoch, dass die Steuerung zur Ermittlung einer Bestromung der Leuchte mit einem Bordnetz des Fahrzeugs, zum Beispiel mit einer zur jeweiligen Leuchte führenden Stromversorgungsleitung, verbunden ist. Es ist aber auch möglich, dass die Steuerung mit einem Bus des Bordnetzes verbunden ist, über das die Leuchte aktiviert wird. Das Bordnetz des Fahrzeugs ist von außen nicht manipulierbar, was die Diebstahlsicherheit verbessert.

Die mindestens eine Aktivierungsbedingung bildet zweckmäßigerweise einen Bestandteil einer Aktivierungsbedingungsgruppe, die die Steuerung zur Aktivschaltung des Schlittenantriebsschalters und/oder des Halteantriebsschalters für das Zeitintervall prüft, wobei die Aktivierungsbedingungsgruppe mindestens zwei Aktivierungsbedingungen aufweist, welche die Steuerung für eine Aktivierung des Schlittenantriebsschalters und/oder des Halteantriebsschalters prüft. Somit ist eine Aktivierung des Schlittenantriebsschalters und/oder des Halteantriebsschalters bei einem Einfachfehler, beispielsweise einem Kurzschluss, einer Störung an einem Schalter, durch eine Manipulation von außen oder dergleichen, unproblematisch, weil mindestens eine zweite Aktivierungsbedingung hinzutreten muss, bevor die Steuerung den Schlittenantriebsschalter und/oder den Halteantriebsschalter aktiv schaltet beziehungsweise für ein Auslösen des Halteantriebs freigibt.

Die Aktivierungsbedingungsgruppe umfasst zweckmäßigerweise mindestens zwei der vorgenannten Aktivierungsbedingungen.

Besonders vorteilhafte Varianten von Aktivierungsbedingungsgruppen werden nachfolgend vorgestellt:

Eine besonders bevorzugte Aktivierungsbedingungsgruppe umfasst beispielsweise die beiden folgenden Aktivierungsbedingungen: Motorstartschalter zum Starten eines Fahrzeug-Motors des Fahrzeugs in Funktionsstellung "Motor aus" und/oder "Schlüssel aus einem Zündschloss des Fahrzeugs entfernt". An dieser Bedingung erkennt die Steuerung, dass das Fahrzeug außer Betrieb ist. Eine andere Bedingung wäre, dass der Motor des Fahrzeuges nicht läuft. Allerdings ist das Signal "Klemme 15" im Bereich des Fahrzeug-Hecks z.B. wegen einer Anhänger-Steckdose beziehungsweise einer Anhängekupplung häufig ohnehin vorhanden, so dass die Stellung des Motorstartschalters eine bevorzugte, einfach realisierbare Bedingung ist. Die weitere Bedingung der Aktivierungsbedingungsgruppe ist dann:
- mindestens eine, vorzugsweise mindestens zwei Blinkleuchten des Fahrzeugs eingeschaltet beziehungsweise mit wechselnder Bestromung.

Nach dem Abstellen des Fahrzeuges ist das Signal "Klemme 15" in der Regel "AUS" beziehungsweise wird der Zündschlüssel aus dem Zündschloss entfernt.

In einem nächsten Schritt wird das Fahrzeug verriegelt oder entriegelt, wobei bei aktuellen Fahrzeugen die Blinker des Fahrzeuges zumindest einmal aufleuchten. Die Bedienung erfolgt beispielsweise über die Funkfernbedienung, deren Sender zweckmäßigerweise in einem Gehäuse des Fahrzeugschlüssels angeordnet ist. Die Sicherheit bei diesem Konzept ist hoch, da zum einen die Startbedingung "Klemme 15 aus" und zum anderen mindestens ein Heckleuchtensignal, vorzugsweise zwei Heckleuchtensignale (der beiden heckseitigen Blinkleuchten), von der erfindungsgemäßen Steuerung ausgewertet werden. Die Signale der heckseitigen Blinkerleuchten sind im Heckbereich mit kurzen Leitungswegen für die erfindungsgemäße Steuerung verfügbar. Eine Auslösung während der Fahrt des Fahrzeuges ist nicht möglich. Eine Sabotage ist kaum möglich. Zudem sind die Kosten dieser Variante gering. Die Bedienung ist komfortabel.

Es versteht sich, dass das Sicherheitskonzept der Aktivierungsbedingungsgruppe auch mit anderen kombinierten Aktivierungsbedingungen realisierbar ist, beispielsweise:
- Nebenschlussleuchte und/oder Rückfahrscheinwerfer eingeschaltet und
- Motorschalter zum Starten eines Fahrzeug-Motors des Fahrzeugs in Betriebsbereitschaft, beispielsweise Signal "Klemme 15 ein", "Schlüssel ins Zündschloss gesteckt" oder dergleichen.

Es versteht sich, dass zu den beiden vorgenannten Aktivierungsbedingungsgruppen auch weitere Aktivierungsbedingungen hinzutreten können, was die Sicherheit des erfindungsgemäßen Konzeptes erhöht.

Nachfolgend werden weitere Aktivierungsbedingungen erörtert, die vorteilhaft sind.

Mindestens eine Aktivierungsbedingung kann beispielsweise auch umfassen, dass der Schlittenantriebsschalter und/oder der Halteantriebsschalter vor Beginn der Aktivierung unbetätigt ist. Wenn also ein Bediener beispielsweise den Schlittenantriebsschalter und/oder den Halteantriebsschalter bereits drückt, bevor das Zeitintervall an sich beginnen würde, aktiviert die Steuerung den Schlittenantriebsschalter und/oder den Halteantriebsschalter nicht. Bei gedrücktem Schlittenantriebsschalter und/oder dem Halteantriebsschalter erfolgt also keine Aktivierung.

Eine weitere Sicherheitsmaßnahme ist es, wenn die Steuerung ein Starten des Schlittenantriebs oder des Halteantriebs nur dann zulässt, wenn der Schlittenantriebsschalter und/oder der Halteantriebsschalter nach Beginn des Zeitintervalls von einer unbetätigten Stellung in eine Betätigungsstellung betätigt wird. Die Steuerung prüft also eine Signalflanke "Aus-Ein".

Der Schlittenantrieb ist vorteilhaft nur während einer Betätigung des Schlittenantriebsschalters und/oder der Halteantrieb nur während einer Betätigung des Halteantriebsschalters in Betrieb. Wenn der Bediener den Schlittenantriebsschalter und/oder den Halteantriebsschalter loslässt, schaltet auch der Schlitten- bzw. Halteantrieb ab. Dadurch wird sichergestellt, dass der Schlittenantrieb oder der Halteantrieb nicht ohne Bedieneraufsicht läuft.

Es versteht sich, dass bei einer Ausgestaltung der Erfindung der Schlittenantriebsschalter und/oder der Halteantriebsschalter nur einen Startimpuls für den Schlittenantrieb oder den Halteantrieb gibt und dieser dann so lange läuft, bis die der Schlitten die Gebrauchsstellung oder die Ruhestellung oder die Halteeinrichtung die Freigabestellung oder die Haltestellung erreicht.

Ferner kann z.B. bei der Steuerung eine Begrenzungseinrichtung vorgesehen sein, die eine Aktivierung, z.B. Bestromung, des Halteantriebs zeitlich auf eine zum Erreichen der Haltestellung oder der Freigabestellung oder des Schlittenantriebs zum Erreichen der Ruhe- oder Gebrauchsstellung nötige Dauer begrenzt. Dadurch wird z.B. eine Überhitzung oder ein unnötiger Energieverbrauch vermieden.

Die Steuerung kann so ausgestaltet sein, dass sie das Zeitintervall während einer Bestromung des Schlitten- oder Halteantriebs und/oder während einer Betätigung des Schlittenantriebsschalters oder Halteantriebsschalters verlängert. Somit wird verhindert, dass der Schlittenantrieb oder Halteantrieb abschaltet, bevor die Ruhe- oder Gebrauchsstellung bzw. die Haltestellung oder die Freigabestellung erreicht ist. Andererseits braucht das Zeitintervall nicht unnötig lange zu sein, da lediglich der Start des Schlittenantriebs oder Halteantriebs innerhalb des Zeitintervalls erfolgen muss. Sinngemäß ist diese Verlängerung also auch beim Schlittenantrieb bzw. Schlittenantriebsschalter vorteilhaft, um sicher die Ruhe- oder Gebrauchsstellung zu erreichen.

Die Steuerung umfasst zweckmäßigerweise mindestens einen Signalausgang zur Ansteuerung einer optischen und/oder akustischen Funktionsanzeigeeinrichtung des Fahrzeugs oder des Lastenträgers. Die Funktionsanzeigeeinrichtung kann aber auch ein integraler Bestandteil der Steuerung sein, beispielsweise auf einer Steuerungsplatine oder im Gehäuse der Steuerung angeordnet sein. Die Funktionsanzeigeeinrichtung ist zweckmäßigerweise im Bereich des Lastenträgers angeordnet, das heißt im Bedienbereich zum Verstellen des Schlittens zwischen der Gebrauchsstellung und der Ruhestellung. Ferner kann die Funktionsanzeigeeinrichtung auch in einem Display des Fahrzeugs vorgesehen sein, beispielsweise im Cockpit desselben.

Die Steuerung signalisiert beispielsweise eine Aktivierung des Schlittenantriebsschalters und/oder des Halteantriebsschalters über die mindestens eine Funktionsanzeigeeinrichtung. Ferner kann die Steuerung beispielsweise auch eine Störung der Halteeinrichtung oder eine Fehlbedienung mittels der Funktionsanzeigeeinrichtung anzeigen, beispielsweise wenn der Schlittenantriebsschalter und/oder der Halteantriebsschalter bereits vor Beginn des Zeitintervalls gedrückt war.

Ein weiteres Sicherheitsmerkmal kann ein Doppel-Betätigungskonzept sein: Der Schlittenantriebsschalter und/oder der Halteantriebsschalter kann nur dann wirksam betätigt werden, wenn ein zusätzlicher Freigabeschalter oder Sicherheitsschalter gleichzeitig oder in kurzer Zeit vorher bedient worden ist. Nur wenn also beide Schalter (Schlittenantriebsschalter UND Sicherheitsschalter bzw. Halteantriebsschalter und Sicherheitsschalter) gleichzeitig oder fast gleichzeitig betätigt werden, ist ein Verfahren des Halteantriebs von der Halte- in die Freigabestellung oder umgekehrt möglich.

Nachfolgend werden Ausführungsbeispiele der Erfindung anhand der Zeichnung dargestellt. Es zeigen:
- Figur 1: eine schematische Schrägansicht eines Lastenträgers in Gebrauchsstellung, der in ein Heck eines in
- Figur 2: von hinten schematisch dargestellten Kraftfahrzeuges einfahrbar und aus diesem ausfahrbar ist,
- Figur 3: eine teilweise schematische Querschnittsansicht des Lastenträgers gemäß Figur 1 mit einer Halteeinrichtung gemäß einer ersten Ausführungsform,
- Figur 4: eine Anordnung ähnlich wie Figur 3, jedoch mit einer Halteeinrichtung in einer zweiten Ausführungsform,

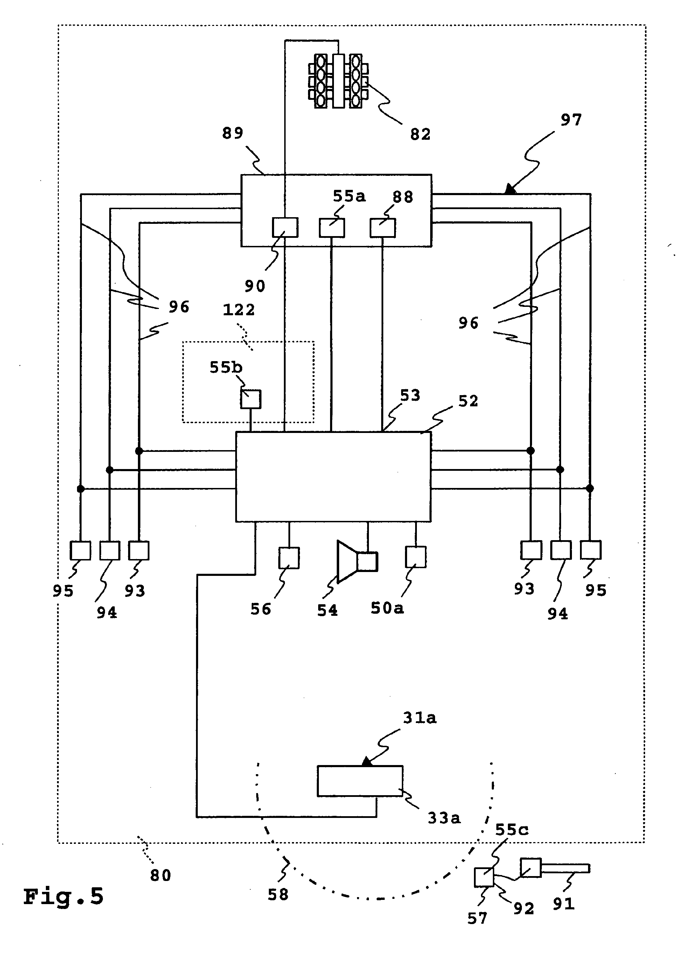

- Figur 5: einen schematischen Schaltplan des Kraftfahrzeuges gemäß Figur 2 sowie einer Steuerung der Halteeinrichtung gemäß Figur 3 oder Figur 4,
- Figur 6: eine Abwandlung des Lastenträgers gemäß Figur 1 mit einem Riemenantrieb,
- Figur 7: eine schematische Seitenansicht des Schlittens sowie eines Anschlages dafür, und
- Figur 8: eine schematische Seitenansicht eines Schlittens, der als Gleit- oder Rollwagen ausgestaltet ist, sowie eines teleskopierbaren Schlittenantriebs 133d.

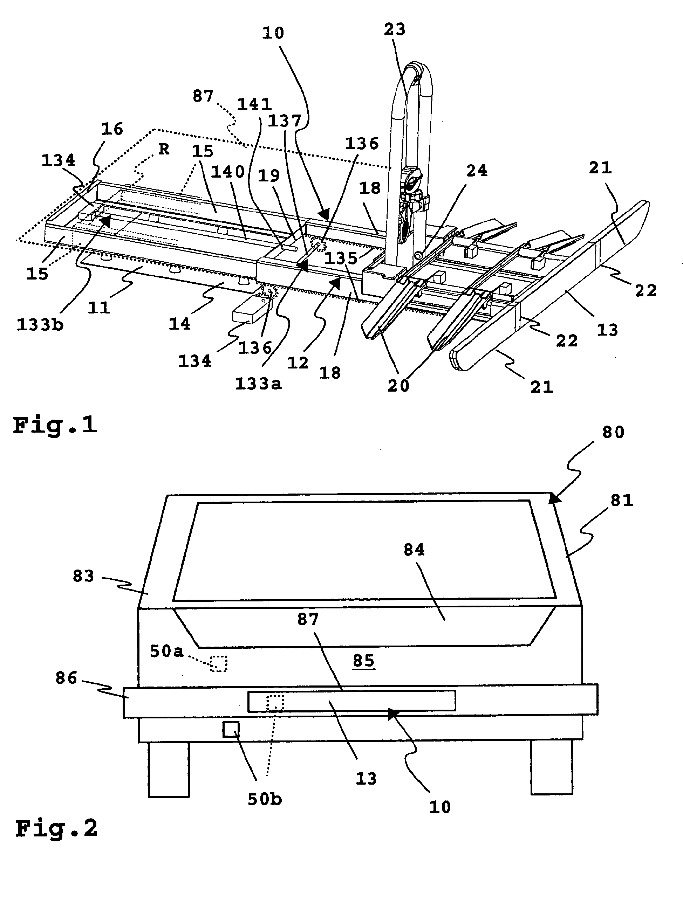

Ein Fahrzeug 80, z.B. ein PKW, hat eine Karosserie 81 und ist durch einen Antriebsmotor 82, beispielsweise einen Elektro- oder Verbrennungsmotor, antreibbar. An einem Heck 83 der Karosserie 81 befindet sich unter einem Deckel 84 ein Gepäckabteil 85 sowie ein Heckstoßfänger 86. Das Fahrzeug 80 ist beispielsweise ein Personenkraftwagen. Im Bereich des Heckstoßfängers 86 ist weiterhin eine Lastenträgeraufnahme 87 für einen Lastenträger 10, der in Figur 1 detaillierter dargestellt ist, vorgesehen. Die Lastenträgeraufnahme 87 ist eine Art Tasche oder Ausnehmung, in der eine Schlitten-Führungsbasis 11 des Lastenträgers 10, angeordnet ist. An der Schlitten-Führungsbasis 11 ist ein Schlitten 12 längsverschieblich geführt, so dass er zwischen einer Gebrauchsstellung G (ausgezogen dargestellt), in der er vor das Heck 83 des Fahrzeugs 80 vorsteht und mit einer Last beladbar ist, und einer Ruhestellung R (gestrichelt angedeutet) verstellbar ist, wobei der Schlitten 12 in der Ruhestellung R in einem Innenraum bzw. in der Lastenträgeraufnahme 87 aufgenommen ist, so dass er nicht vor das Heck 83 vorsteht.

In der Ruhestellung R fluchtet ein Kennzeichenträger 13 des Schlittens 12 etwa mit dem Heckstoßfänger 86, so dass er quasi einen Bestandteil desselben bildet.

Die Schlitten-Führungsbasis 11 weist vorliegend eine Halteplatte 14 auf, an deren Oberseite Führungsschienen 15 angeordnet sind, die zueinander parallel sind. Die Führungsschienen 15 sind auf nicht näher bezeichneten Stützen angeordnet, könnten aber auch unmittelbar auf der Halteplatte 14 befestigt sein. Es versteht sich, dass die Halteplatte 14 nur beispielhaft für sonstige Befestigungseinrichtung steht, mit denen die Führungsschienen 15 am Fahrzeug 80 befestigbar sind. Ein etwa am Boden bzw. in Fahrtrichtung des Fahrzeugs 80 vorn gelegener Endbereich der Führungsschienen 15 ist durch einen Querträger 16 verbunden, so dass insgesamt durch die Führungsschienen 15 und den Querträger 16 eine U-förmige Anordnung getroffen ist.

Der Schlitten 12 hat eine in Draufsicht im Wesentlichen rechteckige Gestalt. Dabei werden zwei Längsseiten dieses Rechteckes von Läuferschienen 18 gebildet, die an den Führungsschienen 15 geführt und längsverschieblich sind. Die Läuferschienen 18 sind auf der dem Querträger 16 zugewandten Seite durch einen Querträger 19 miteinander verbunden. Am heckseitigen Ende des Schlittens 12, d.h. entgegengesetzt zum Querträger 19, befindet sich der Kennzeichenträger 13, der die Läuferschienen 18 miteinander verbindet.

Der Schlitten 12 bildet eine Tragbasis zum Auflegen von Lasten, beim Ausführungsbeispiel Fahrrädern. Diese sind auf Trägerrinnen 20 aufstellbar, die schwenkbeweglich an den Läuferschienen 18 gelagert sind. Die Trägerrinnen 20 können zwischen die Läuferschienen 18 in eine Nichtgebrauchsstellung geschwenkt werden, in der der Schlitten 12 in Richtung der Schlitten-Führungsbasis 11, d.h. in die Ruhestellung R, verstellbar ist. Zu diesem Zweck werden auch Leuchten 21, die beispielsweise Bremslichter, Blinker, Rückfahrscheinwerfer und dergleichen umfassen, in Richtung der Läuferschienen 18 geschwenkt, wofür Schwenklager 22 zwischen dem Kennzeichenträger 13 und den Leuchten 21 vorgesehen sind.

Weiterhin ist es möglich, zum Verstellen des Schlittens 12 in die Ruhestellung R einen Träger 23, beispielsweise in Gestalt eines U-Bügels, in den Zwischenraum zwischen die Läuferschienen 18 zu schwenken, wofür Schwenklager 24 vorgesehen sind. Dann ist also auch der Träger 23 platzsparend untergebracht, so dass der Schlitten 12 in die Lastenträgeraufnahme 87 passt.

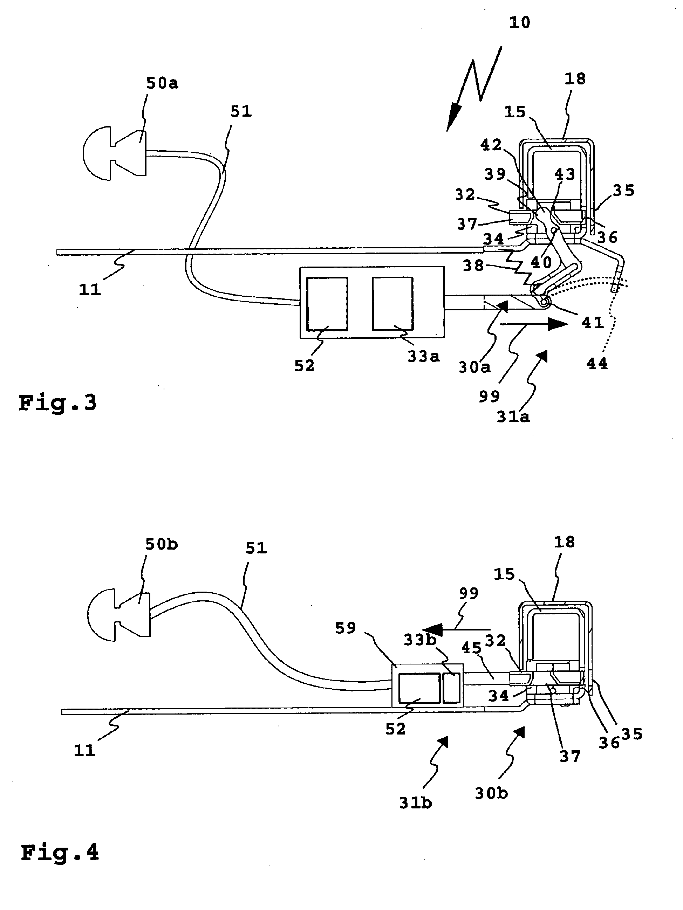

Zum Halten des Schlittens 12 in der Gebrauchsstellung G und/oder der Ruhestellung R, sind beispielhaft in den Figuren 3 und 4 dargestellte Halteeinrichtungen 30a, 30b zweckmäßigerweise vorgesehen, jedoch optional. Die Halteeinrichtungen 30a, 30b sind vorliegend als Verriegelurigseinrichtung 31a, 31b ausgestaltet und haben Riegel 32, die durch Halteantriebe 33a, 33b betätigbar sind. Die Riegel 32 sind an Lagern 34 schiebebeweglich zwischen einer Haltestellung oder Verriegelungsstellung, in der sie in Halteaufnahmen 35 des Schlittens 12 eingreifen, und einer Freigabestellung (in Figuren 3 und 4 dargestellt) verstellbar, in der die Riegel 32 außer Eingriff mit den Halteaufnahmen 35 sind, so dass der Schlitten 12 bezüglich der Schlitten-Führungsbasis 11 längsverschieblich ist, z.B. zum Verstauen in der Lastenträgeraufnahme 87.

Die Riegel 32 sind quer zur Auszugsrichtung bzw. Laufrichtung des Schlittens 12 bezüglich der Schlitten-Führungsbasis 11 angeordnet und vorliegend als eine Art Stift ausgestaltet.

Die Führungsschienen 15 und die Läuferschienen 18 haben vorliegend eine U-förmige Ausgestaltung, wobei andere Geometrien selbstverständlich ohne Weiteres möglich sind. Beispielsweise befindet sich das Lager 34 unterhalb der Führungsschienen 15, in der Zeichnung beispielsweise der in Fahrtrichtung rechten Führungsschiene 15, und ist so positioniert, dass der Riegel 32 in einen Seitenschenkel der Läuferschiene 18 in der Verriegelungsstellung bzw. Haltestellung eingreift. Wenn der Riegel 32 hingegen in die Lösestellung verstellt ist (Figuren 3, 4) steht er beispielsweise seitlich vor die Läuferschiene 18 vor.

Einen optimalen Halt erzielt man vorliegend dadurch, dass das Lager 34 nicht nur unterhalb der Führungsschiene 15, sondern innerhalb derselben, d.h. in deren Innenraum, angeordnet ist. Somit greift der Riegel 32 in der Verriegelungsstellung oder Haltestellung nicht nur in die Halteaufnahme 35 ein, sondern durchgreift auch eine in der Ruhestellung R oder der Gebrauchsstellung G mit der Halteaufnahme 35 fluchtende Halteaufnahme 36 an der Führungsschiene 15 ein. Dadurch sind die Schienen 15, 18 gegeneinander in Auszugsrichtung des Schlittens 12 bezüglich der Schlitten-Führungsbasis 11 verriegelt.

Die Riegel 32 bilden Halteglieder zum ortsfesten Halten des Schlittens 12 bezüglich der Schlitten-Führungsbasis 11 bzw. des Fahrzeuges 80.

Es versteht sich, dass nicht nur an einem Paar Schienen 15, 18, sondern auch an beiden, zueinander parallelen Schienenpaaren 15, 18 Halteeinrichtungen 30a oder 30b vorgesehen sein können. Weiterhin ist es möglich, dass auch in Auszugsrichtung des Schlittens 12 mehrere Halteeinrichtungen in der Art der Halteeinrichtungen 30a, 30b hintereinander angeordnet sind.

Der Riegel 32 wird durch eine Feder 38 in seine Verriegelungsstellung oder Haltestellung belastet. Die Feder 38 ist einerseits an der Schlitten-Führungsbasis 11 und andererseits an einem Betätigungshebel 39 befestigt, der den Riegel 32 betätigt. Der Betätigungshebel 39 ist schwenkbeweglich an einem Schwenklager 40 gelagert. Die Feder 38 sowie der Halteantrieb 33a greifen an einem Betätigungsende 41 des vorliegend winkeligen Betätigungshebels 39 an. Der Betätigungshebel 39 hat neben dem Betätigungsende 41 ein Wirkende 42, das in eine Aufnahme 43 des Riegels 32 eingreift. Das Wirkende 42 und das Betätigungsende 41 sind an einander entgegengesetzten Seiten bezüglich des Schwenklagers 40 angeordnet. Wird der Betätigungshebel 39 um das Schwenklager 40 geschwenkt, nimmt er den Riegel 32 in die Verriegelungsstellung oder die Entriegelungsstellung bzw. Freigabestellung mit.

Während ein Abtrieb 45 des Halteantriebs 33a am Betätigungsende 41 des Betätigungshebels 39 angreift, dort zweckmäßigerweise schwenkbeweglich gelagert ist, und nur in Richtung einer Verstellung des Riegels 32 in die Freigabestellung wirksam ist (in Gegenrichtung wirkt die Feder 38), betätigt ein Abtrieb 45 des Halteantriebs 33b den Riegel 32 sowohl in die Haltestellung oder Verriegelungsstellung als auch in die Freigabestellung, die in Figur 4 dargestellt ist.

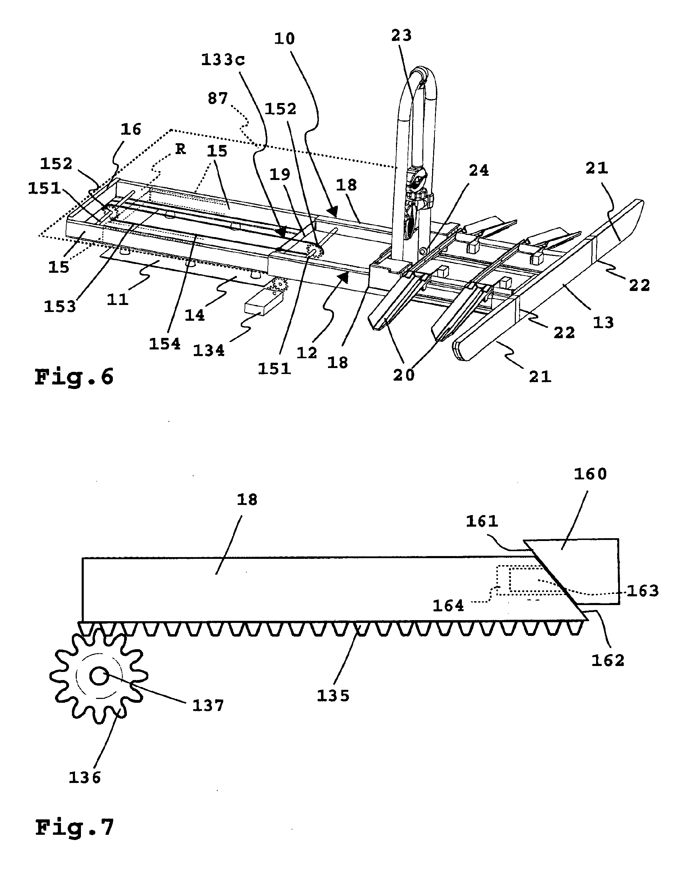

Weiterhin ist der Schlitten 12 durch nachfolgend näher beschriebene Schlittenantriebe 133a, 133b oder 133c zwischen der ausgezogenen Gebrauchsstellung G und der Ruhestellung R verfahrbar, wobei in Figur 1 exemplarisch beide Schlittenantriebe 133a und 133b eingezeichnet sind (einer würde genügen), und in Figur 6 der Schlittenantrieb 133c exemplarisch dargestellt ist.

Die Schlittenantriebe 133a-133c haben Antriebsmotoren 134, beispielsweise Elektromotoren, die durch die später noch beschriebenen Antriebsschalter 50a oder 50b betätigbar sind. Weiterhin wird zur Ansteuerung der Schlittenantriebe 133a-c ebenfalls die zur Steuerung der Halteeinrichtungen 30a, 30b verwendete Steuerung 52 verwendet, wobei selbstverständlich die Steuerung 52 auch nur dafür vorgesehen sein könnte, die Schlittenantriebe 133a-c anzusteuern.

In diesem Zusammenhang ist noch erwähnenswert, dass die Halteeinrichtungen 30a oder 30b optional auch wegfallen könnten, da die Schlittenantriebe 133a-133c vorteilhaft ein selbsthemmendes Antriebskonzept haben, d.h. sie halten den Schlitten 12 in der jeweils angefahrenen Position auch ohne die Mitwirkung einer Halteeinrichtung - wobei diese selbstverständlich in jedem Fall als Verriegelung und zusätzliche Sicherheitsmaßnahme zweckmäßig ist.

Beim Schlittenantrieb 133a sind Zahnschienen 135 an den Läuferschienen 18 vorgesehen. Vorliegend befinden sich die Zahnschienen 135 an der Längsunterseite der Läuferschienen 18, d.h. sie sind beispielsweise der Halteplatte 14 zugewandt, wenn der Schlitten 12 oberhalb der Führungsbasis 11 steht. Die Zahnschienen 135 werden durch Ritzel 136 angetrieben, die mit den Zahnschienen 135 kämmen. Nun wäre es möglich, dass jedes der Ritzel 136 durch einen separaten Antriebsmotor angetrieben wird oder auch dass nur eine Kombination Ritzel-Zahnschiene an einer der Läuferschienen 18 vorgesehen ist. Das vorliegende Konzept, bei dem die beiden Ritzel 136 durch eine Welle 137 wirkverbunden sind, stellt jedoch sicher, dass der Schlitten 12 auf den Führungsschienen 15 nicht verkantet, wenn er in Richtung der Ruhestellung R oder der Gebrauchsstellung G verfahren wird. Der Antriebsmotor 134 könnte nunmehr direkt an die Welle 137 angeflanscht werden, um diese anzutreiben. Vorliegend treibt der Antriebsmotor 134 jedoch mit einem Stirnrad oder Stirnritzel eines der Ritzel 136 an. Eine bevorzugte, in der Zeichnung nicht dargestellte Anordnung könnte vorsehen, dass der Antriebsmotor 134 in dem Zwischenraum zwischen den Läuferschienen 18 positioniert ist, was platzsparend ist. Dort könnte er unmittelbar beispielsweise von der Welle 137 durchdrungen sein, die dann die Motorwelle darstellt.

Weiterhin wäre es möglich, dass der Antriebsmotor 134 die Welle 137 mit einem Schneckengetriebe antreibt, so dass dadurch eine Selbsthemmung gegeben ist. Die Anordnung könnte so getroffen sein, dass die Motorwelle und die Welle 137 zueinander winkelig, insbesondere rechtwinkelig sind.

Es versteht sich, dass die Darstellung in Figur 1 nur exemplarisch zu sehen ist, d.h. das Abwandlungen, beispielsweise Kegelradgetriebe oder dergleichen, ohne weiteres möglich sind. Weiterhin ist es möglich, dass jeder der Zahnschienen 135 ein separater Antriebsmotor zugeordnet ist, um diese anzutreiben.

Der Schlittenantrieb 133b steht beispielhaft für einen Spindelantrieb oder einen Schubstangenantrieb. Der Antriebsmotor 134 treibt beispielsweise eine Spindel 140 an, die im Wesentlichen parallel zu den Läuferschienen 18 verläuft. Die Spindel 140 ist in eine Spindelmutter 141 am Querträger 19 eingeschraubt, so dass durch Rotation der Spindel 140 der Schlitten 12 vor und zurück, d.h. in Richtung der Ruhestellung R oder der Gebrauchsstellung G verfahrbar ist. Selbstverständlich ist ein Gewinde zwischen der Spindel 140 und der Spindelmutter 141 so ausgestaltet, dass eine Selbsthemmung eintritt. Sind jedoch zusätzliche Haltemittel oder die vorher beschriebenen Halteeinrichtungen 30a oder 30b vorhanden, ist eine Selbsthemmung selbstverständlich nicht notwendig, sondern nur zweckmäßig.

Das in Figur 6 dargestellte Antriebskonzept des Schlittenantriebs 133c basiert auf einem Riemen- oder Kettenantrieb. Eine Kette 153 läuft um Ritzel 152 um, die an Wellen 150 und 151 angeordnet sind. Die Welle 150 befindet sich beispielsweise etwa dort, wo die Welle 137 ist, d.h. zweckmäßigerweise am heckseitigen Endbereich der Schlitten-Führungsbasis 11. Die andere Welle 150 ist dazu in Längsabstand angeordnet, d.h. in der Nähe des Querträgers 16. Ein Trum 154 der Kette 153 ist fest mit dem Schlitten 12 verbunden, beispielsweise am Querträger 19 befestigt. Eine oder beide der Wellen 150 oder 151 wird nunmehr angetrieben, vorliegend ist es die Welle 150, um den Schlitten 12 zwischen der Ruhestellung R und der Gebrauchsstellung G zu verstellen.

In Figur 7 ist nunmehr ein mögliches Beispiel dargestellt, bei dem ersichtlich ist, dass die Halteeinrichtungen 30a, 30b zweckmäßig, aber nicht unbedingt erforderlich sind:

Beispielsweise könnte der Schlitten 12 gegen einen Anschlag 160 verfahren werden. Der Anschlag 160 hat zweckmäßigerweise eine Schrägfläche 161. Dazu komplementär verläuft eine Schrägfläche 162 am Schlitten 12, beispielsweise an einer oder beiden der Läuferschienen 18. Wird nunmehr der Schlitten 12 gegen den Anschlag 160 verfahren, beispielsweise durch den Schlittenantrieb 133a (die anderen Schlittenantriebe könnten das ebenfalls tun), verkeilen sich die beiden Schrägflächen 161, 152, so dass der Schlitten 12 ortsfest gehalten ist. Zur besseren Veranschaulichung sind die Schrägflächen 161 verhältnismäßig steil. Man könnte auch in anderer Ausgestaltung auch flachere Schrägflächen vorsehen, so dass ein Selbsthemmeffekt beim Anschlagen des Schlittens 12 am Anschlag 160 auftritt.

Am Anschlag 160 kann beispielsweise auch ein Riegelvorsprung oder Haltevorsprung 163 angeordnet sein, der in eine Halteaufnahme oder Riegelaufnahme am Schlitten 12 eingreift. Es versteht sich, dass der Riegelvorsprung auch am Schlitten 12, die Riegelaufnahme am Anschlag 160 angeordnet sein können.

Gerade beim Anfahren des Schlittens 12 gegen einen Anschlag, z. B. den Anschlag 160, ist es vorteilhaft, wenn der jeweilige Schlittenantrieb 133a-133c sozusagen nachtaktet. Die Steuerung 52 steuert dabei immer wieder den Schlittenantrieb 133a-133c so an, dass er den Schlitten 12 in Richtung des Anschlags 160 bewegt, so dass auch beim Fahrbetrieb kein Spiel zwischen dem Schlitten 12 und dem Anschlag 160 auftritt. Abhängig ist dieses Nachtakten selbstverständlich von einer vorherigen Schlitten-Fahrbewegung, d.h. wenn der Schlitten 12 zunächst in die Ruhestellung R verfahren wird, wird in Richtung der Ruhestellung R nachgetaktet, wohingegen bei der Gebrauchsstellung G der Schlittenantrieb 133a-133c in Richtung der Gebrauchsstellung G nachtaktet oder nachstellt.

Anzumerken ist noch, dass selbstverständlich auch nicht schräge Anschläge möglich sind. Ferner ist es vorteilhaft, wenn sowohl der Gebrauchsstellung G als auch der Ruhestellung R jeweils ein Anschlag zugeordnet ist.

Die Schlittenantriebe 133a, b, c und die Halteantriebe 33a, 33b sind aufgrund des erfindungsgemäßen, innovativen Konzeptes bequem betätigbar. Die Schlittenantriebe 133a, b, c einerseits und die Halteantriebe 33a, 33b andererseits lassen sich durch gemeinsame Antriebsschalter 50a, 50b betätigen, wobei zunächst entriegelt und dann der Schlitten 12 verfahren wird und dann der Schlitten 12 anhält, bevor die Halteeinrichtung verriegelt.

Die Antriebsschalter 50a, 50b lassen sich frei am Fahrzeug 80 positionieren, beispielsweise am Heck 83. Die Antriebsschalter 50a, 50b sind vorliegend elektrische Schalter, die über Leitungen 51 mit einer Steuerung 52 verbunden sind, die ihrerseits wiederum die Halteantriebe 33a, 33b ansteuert. Beispielsweise ist der Antriebsschalter 50a im Gepäckabteil 85 angeordnet. Der Antriebsschalter 50b hingegen ist unmittelbar in der Nähe des Lastenträgers 10, d.h. am Heck 83 in einem Außenbereich des Fahrzeuges 80 positioniert. Der Antriebsschalter 50b befindet sich in der Darstellung gemäß Figur 2 beispielsweise unterhalb des Heckstoßfängers 86, d.h. in einem gegen Sicht abgedeckten Bereich. Eine bevorzugte Anordnung des Antriebsschalters 50b sieht vor, dass dieser hinter dem Kennzeichenträger 13 angeordnet ist oder am Kennzeichenträger 13 angeordnet ist, d.h. unmittelbar am Schlitten 12. Wenn nunmehr ein Bediener den Antriebsschalter 50b betätigt, ist er direkt in der Nähe des Schlittens 12, so dass dieser nicht unbeaufsichtigt aus dem Heck 83 des Fahrzeuges 80 ausfahren kann, beispielsweise wenn das Heck hangabwärts steht.

Die Steuerung 52 kontrolliert zweckmäßigerweise Aktivierungsbedingungen, die ein Ansteuern des Halteantriebs 33a, 33b mit den Antriebsschaltern 50a oder 50b ermöglichen, mithin also ein Endriegeln oder Lösen des Schlittens 12 bezüglich der Schlitten-Führungsbasis 11 oder des Fahrzeugs 80. Weiterhin ermöglicht die Steuerung 52 eine Funktionsanzeige der Halteeinrichtungen 30a, 30b, so dass eine Bedienperson jederzeit über deren Zustand, beispielsweise Fehlerzustand oder Funktionszustand, Kenntnis haben kann:

Beispielsweise ist eine akustische Funktionsanzeige vorteilhaft. So kann die Steuerung 52 beispielsweise eine akustische Funktionsanzeigeeinrichtung 54 umfassen, zum Beispiel einen Lautsprecher, der bei einem Fahrbetrieb des Halteantriebs 33a, 33b ein Funktionsgeräusch, beispielsweise eine pulsierende Tonfrequenz, ausgibt. Ist die Verriegelung erfolgreich verlaufen, quittiert dies die Funktionsanzeigeeinrichtung 54 mit einem Dauerton für eine vorbestimmte Zeit. Es versteht sich, dass die Steuerung 52 auch einen Lautsprecher des Fahrzeugs 80 vorteilhaft ansteuern kann (nicht dargestellt), z.B. einen Lautsprecher eines Audiosystems.

Die Steuerung 52 enthält vorteilhaft einen Signalausgang 53 zur Ansteuerung einer Funktionsanzeigeeinrichtung 88 des Fahrzeugs 80. Der Signalausgang 53 ist beispielsweise ein Bestandteil einer Busschnittstelle der Steuerung 52. Die Funktionsanzeigeeinrichtung 88 ist beispielsweise ein Display in einem Cockpit 89 des Fahrzeugs 80.

Es versteht sich, dass auch nur eine der Funktionsanzeigeeinrichtung 54 und/oder der Signalausgang 53 vorgesehen sein können. Die Funktionsanzeigeeinrichtung 54 und der Signalausgang 53 sind vorteilhafte Optionen.

Die Steuerung 52 schaltet nämlich den Halteantrieb 33a, 33b und/oder den Antriebsschalter 50a und/oder 50b nicht dauerhaft aktiv, sondern nur für ein vorbestimmtes Zeitintervall anhand mindestens einer Auslösebedingung.

Diese Auslösebedingung kann beispielsweise ein von einem Freigabeschalter sendbares Freigabesignal sein. Beispielsweise ist im Cockpit 89 ein Freigabeschalter 55a und/oder im Gepäckabteil 85 des Fahrzeugs 80 ein Freigabeschalter 55b angeordnet. Der Bediener kann beispielsweise somit im Innenraum des Fahrzeugs 80 einen der Freigabeschalter 55a, 55b betätigen, worauf die Steuerung 52 für ein Zeitintervall, beispielsweise 15-30 Sekunden, den Antriebsschalter 50a aktiv schaltet, d.h. einen Betrieb des Halteantriebs 33a, 33b zulässt. Der Bediener hat dann bequem Zeit, zum Schlitten 12 zu gehen und dort die Verriegelungseinrichtung 31a, 31b zu entriegeln.

Ein weiteres, innovatives Freigabekonzept ist in der Art des Keyless-Go ausgestaltet. Die Steuerung 52 umfasst einen zweckmäßigerweise am Heck 83, beispielsweise am Schlitten 12, angeordneten Funkempfänger 56 zum Empfang eines Freigabesignals, das mit einem hierfür vorgesehenen Freigabesender 57, der somit einen Freigabeschalter 55c darstellt, sendbar ist. Der Freigabesender 57 ist beispielsweise in einem Schlüsselanhängergehäuse 92 angeordnet. Er könnte auch beispielsweise in oder an einem Fahrzeugschlüssel 91 angeordnet sein. Der Funkempfänger 56 hat einen eng begrenzten Empfangsbereich 58, so dass nur dann, wenn der Freigabesender 57 im Empfangsbereich 58 des Funkempfängers 56 ist, der Antriebsschalter 50a freigeschaltet ist.

Es versteht sich, dass eine Freigabe zum Schalten der Verriegelungseinrichtung 31a, 31b in ihre Verriegelungsstellung oder ihre Entriegelungsstellung anhand eines der Freigabeschalter 55a-55c auch zeitlich unlimitiert, das heißt ohne das vorgenannte Zeitintervall, erfolgen kann. So kann der Antriebsschalter 50a beispielsweise immer dann aktiv geschaltet sein, wenn der Freigabesender 57 vom Funkempfänger 56 im Empfangsbereich 58 erkannt wird.

Nachfolgend werden verschiedene Szenarien vorgestellt, bei denen jeweils für ein Zeitintervall einer oder mehrere der Antriebsschalter 50a, 50b der Steuerung 52 aktiv geschaltet werden und nach Ablauf des Zeitintervalls wieder inaktiv.

Beispielsweise wertet die Steuerung 52 eine Funktionsstellung eines Motorstartschalters 90 aus und/oder ob der Fahrzeugschlüssel 91 in den Motorstartschalter 90 gesteckt ist. So kann beispielsweise vorgesehen sein, dass die Steuerung 52 nach einem Ausschalten des Antriebsmotors 82 des Fahrzeugs 80 das Zeitintervall startet. Auch ein Entfernen des Fahrzeugschlüssels 91 aus einem Zündschloss oder aus dem Motorstartschalter 90 kann für die Steuerung 52 eine Auslösebedingung zum Starten des Zeitintervalls sein.

Auch das Bestromen einer Leuchte des Fahrzeugs 80 oder der Lastenträgers 10, vorzugsweise einer Heckleuchte, kann eine Startbedingung für das Starten des Zeitintervalls zur Aktivschaltung des Antriebsschalters 50a und/oder 50b sein. Vorzugsweise wertet die Steuerung 52 dazu Signale beziehungsweise Bestromungen von Heckleuchten, beispielsweise einer Nebelschlussleuchte 93 und/oder eines Rückfahrscheinwerfers 94 und/oder von Blinkleuchten 95 und/oder der Leuchten 21 aus. Die Steuerung 52 ist zur Überprüfung einer Bestromung der Leuchten 21 und/oder 93-95 mit Stromversorgungsleitungen 96 eines Bordnetzes 97 des Fahrzeugs 80 verbunden. Aufgrund der Anbindung an Stromversorgungsleitungen 96 für Heckleuchten sind dabei die Leitungswege kurz. Wenn nun der Bediener des Fahrzeugs 80 beispielsweise einen Rückwärtsgang einlegt, werden die Rückfahrscheinwerfer 94 aktiviert und die Steuerung 52 startet infolgedessen das Zeitintervall. Dazu kommt vorzugsweise eine zweite Auslösebedingung, die die Steuerung prüft, beispielsweise "Klemme 15 eingeschaltet", in der Regel die zweite Rastung des Motorstartschalters 90.

Eine weitere Variante kann vorsehen, dass beispielsweise beim Aktivieren der Nebelschlussleuchte 93 das Zeitintervall oder Zeitfenster zur Aktivierung des Antriebsschalters 50a, 50b von der Steuerung 52 geöffnet beziehungsweise gestartet wird. Auch hier wird zusätzlich zur Auslösebedingung "Nebelschlussleuchte an" vorzugsweise eine zusätzliche Auslösebedingung von der Steuerung 52 ausgewertet, das heißt also eine Auslösebedingungsgruppe. Diese zweite Auslösebedingung kann beispielsweise ebenfalls heißen, dass der Motorstartschalter 90 aktiv geschaltet ist ("Klemme 15 ein").

Durch die zusätzliche Auswertung der Stellung des Motorstartschalters 90 ist eine Maßnahme gegen Fehlbedienung oder Manipulation realisiert.

Es versteht sich, dass die Steuerung 52 bei beiden Szenarien zweckmäßigerweise überprüft, ob der Antriebsmotor 82 ausgeschaltet ist. Mithin ist es also bei laufendem Motor des Fahrzeugs 80 nicht möglich, den Schlitten 12 zu entriegeln und z. B. aus dem Heck 83 auszuziehen.

Ein weiteres, besonders bevorzugtes Szenario sieht vor, dass die Steuerung 52 das Zeitintervall zur Aktivierung der Antriebsschalter 50a, 50b nach dem Abstellen des Fahrzeugs 80 beziehungsweise Deaktivieren desselben startet. Die Auslösebedingungsgruppe umfasst hier die Auslösebedingung, dass der Motorstartschalter 90 ausgeschaltet ist (in der Regel "Klemme 15 aus") und zudem mindestens eine, zweckmäßigerweise beide Blinkleuchten 95 bestromt werden. Hier macht man sich zunutze, dass ein Fahrzeug nach dem Abstellen in der Regel verschlossen wird, wobei Fahrzeuge in der Regel zur Quittierung eines korrekten Verschließvorganges die Blinkleuchten für eine Leuchtsequenz aktivieren, die mindestens ein Aufleuchten der Blinkleuchten umfasst. Wenn also der Motorstartschalter 90 in Stellung "Aus" geschaltet wird und zudem eine oder beide Blinkleuchten 95 mindestens einmal bestromt werden, öffnet die Steuerung 52 das Zeitfenster zur Aktivierung des Antriebsschalters 50a und/oder 50b. Nur dann ist beispielsweise der von außen zugängliche beziehungsweise betätigbare Antriebsschalter 50a freigeschaltet, so dass Fehlbedienungen oder Manipulationen nicht möglich sind. Durch die Abtastung/Ermittlung der Bestromung zweier Blinkleuchten ist eine hohe Fehlbedienungssicherheit oder Sicherheit gegen Fehlauswertung gegeben.

Zweckmäßigerweise ist vorgesehen, dass die Steuerung 52 eine Aktivschaltung des Antriebsschalters 50a und/oder 50b für das Zeitintervall oder Zeitfenster optisch und/oder akustisch signalisiert, beispielsweise über die Cockpit-Funktionsanzeigeeinrichtung 88, wo im Klartext angezeigt werden kann: "Schlitten verstellbar", und/oder an den extern angeordneten Funktionsanzeigeeinrichtung 54. Diese können beispielsweise blinken, eine vorbestimmte Farbe anzeigen oder dergleichen, um die Betriebsbereitschaft beziehungsweise Entriegelungs- oder Verriegelungsbereitschaft zu signalisieren.

Eine weitere Sicherheitsmaßnahme gegen Fehlbedienung kann vorteilhaft vorsehen, dass die Steuerung 52 nur dann ein Starten des Antriebsschalters 50a oder ein Starten des Halteantriebs 33a, 33b oder ein Starten des Schlittenantriebs 133a-c zulässt, wenn der Antriebsschalter 50a nach Beginn des Zeitintervalls von einer unbetätigten Stellung in eine Betätigungsstellung betätigt wird. Wenn also bereits vor Beginn des Zeitintervalls beispielsweise durch Verschmutzung, Kurzschluss oder dergleichen vom Antriebsschalter 50a das Signal "Halteantrieb 33a, 33b an" und/oder "Verriegeln" und/oder "Entriegeln" kommt, startet die Steuerung 52 den Halteantrieb 33a, 33b nicht.

Während einer Bestromung des Halteantriebs 33a, 33b oder einer Betätigung des Antriebsschalters 50a ist es vorteilhaft, dass die Steuerung 52 das Zeitintervall gegebenenfalls verlängert, um eine vollständige Verriegelung oder Entriegelung zu ermöglichen.

Eine Sicherheitsmaßnahme kann zudem vorsehen, dass die Steuerung 52 den Schlittenantrieb 133a-c oder den Halteantrieb 33a, 33b nur während einer Betätigung des jeweiligen den Antriebsschalters 50a oder 50b bestromt, das heißt, dass der Schlittenverfahrvorgang oder den Verriegelungsvorgang oder Entriegelungsvorgang beim Loslassen des jeweiligen Antriebsschalters 50a, 50b abgebrochen wird. Dabei kann es vorteilhaft sein, wenn die Steuerung 52 den Halteantrieb 33a, 33b zu einer Entriegelungsbewegung 99 beziehungsweise Entriegelung ansteuert.

Die Verriegelungseinrichtung 31a, 31b hat zum Anschluss an das Bordnetz 97 beispielsweise elektrische Kontakte, insbesondere eine Anschlussbuchse. Die Kontakte sind beispielsweise an einem Steuerungsgehäuse 59 angeordnet, in dessen Innenraum die elektrischen Komponenten der Steuerung 52 angeordnet sind.

Die Steuerung 52 umfasst beispielsweise einen Mikrocontroller, einen FPGA oder sonstige, zweckmäßigerweise programmierbare Komponenten.

Eine Variante der Erfindung sieht vorteilhaft vor, dass die Steuerung 52 beispielsweise auf eine oder mehrere der vorgenannten Auslösebedingungen programmierbar ist. Auch sonstige Parameter, beispielsweise eine Länge des Zeitintervalls zur Aktivierung der Antriebsschalter 50a, 50b, sind zweckmäßigerweise parametrierbar oder programmierbar, beispielsweise über ein Diagnosegerät einer Werkstatt. Vorteilhaft ist es, wenn ein Bediener selbst, z.B. im Cockpit 89, die Länge des Zeitintervalls und/oder sonstige Parameter der Steuerung 52 einstellen kann. Wenn der Bediener die vorteilhafte Bediensicherheit und Fehlmanipulationssicherheit nicht wünscht, kann er das Zeitintervall beispielsweise auf unendlich programmieren, so dass es sozusagen nie endet und der Antriebsschalter 50a und/oder 50b stets aktiviert sind. Zweckmäßigerweise ist allerdings die Auslösebedingung, dass der Antriebsmotor 82 des Fahrzeugs 80 während eines Verriegelns oder Entriegelns der Lastenträgers 10 außer Betrieb ist, nicht ausparametrierbar.

Zweckmäßigerweise hat eine erfindungsgemäße Halteeinrichtung eine manuell betätigbare Notbetätigung, z.B. einen Bowdenzug, der auf das Halteglied wirkt. Beispielhaft ist eine auf den Betätigungshebel 39 wirkende Notbetätigung 44 in Figur 3 eingezeichnet.

Ein Schlittenantrieb 133d ist teleskopierbar. Aus seinem Gehäuse 170 fährt beispielsweise ein Teleskopteil 171 aus bzw. ein, aus dem wiederum eine Spindel 172 aus- und einfahren kann. Somit baut also der Schlittenantrieb 133d in seiner eingefahrenen Position sehr klein, da nämlich die Komponenten 171, 172 nahezu vollständig oder ganz vollständig in das Gehäuse 170 passen. Der Schlittenantrieb 133d hat also bei großem Verfahrweg ein kompaktes, kurzes Maß, wenn er seine eingefahrene Position einnimmt.

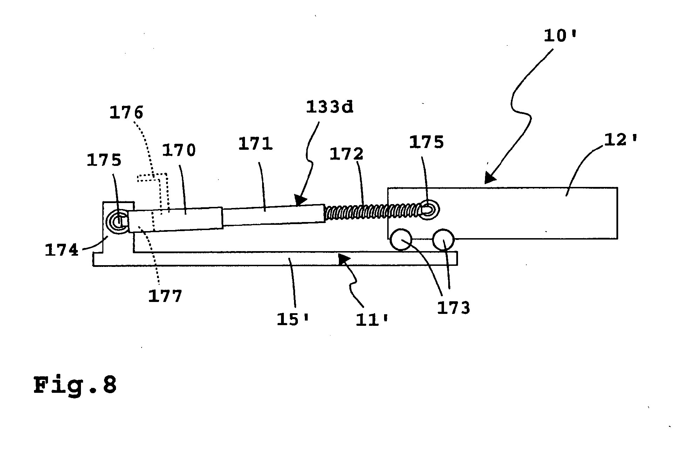

Ein Schlitten im Sinne der Erfindung kann, muss jedoch nicht durch eine Schiene-auf-Schiene-Kombination geführt sein. Beispielsweise rollt der in Figur 8 dargestellte Schlitten 12' eines Lastenträgers 10' auf Rollen 173. Die Rollen 173 laufen auf Führungsbahnen, die bezüglich des Fahrzeuges 80 feststehend sind, beispielsweise an Führungsschienen 15' einer Schlitten-Führungsbasis 11'. Der Schlittenantrieb 133d stützt sich mit seinen Längsenden, die insoweit Stütz- oder Lagerenden 175 bilden, einerseits am Schlitten 12', andererseits an einem Widerlager 174 ab, das bezüglich des Fahrzeuges 80 feststehend ist, beispielsweise einen Bestandteil der Schlitten-Führungsbasis 11' bildet.

Zwar ist es bevorzugt, dass ein erfindungsgemäß angetriebener Schlitten mittels eines beispielsweise elektrischen oder fluidischen Antriebes angetrieben wird. Es ist aber auch eine Handbetätigung möglich, insbesondere als Notbetätigung. So hat der Schlittenantrieb 133d zwar an sich einen Elektromotor 177, um die Spindel 172 aus dem Gehäuse 170 heraus zu treiben, somit also den Schlitten 12' anzutreiben.

Es ist aber auch möglich, dass statt des Elektromotors 177 oder zusätzlich dazu beispielsweise eine Handbetätigungseinrichtung 176, z.B. eine Kurbel, vorgesehen ist, um den Schlittenantrieb 133d zu betätigen. Die Handbetätigungseinrichtung 176 kann beispielsweise bei Nichtgebrauch in Richtung des Gehäuses 170 weggeklappt werden, so dass sie nicht stört. Es ist aber auch möglich, dass die Handbetätigungseinrichtung 176 bei Nichtgebrauch insbesondere werkzeuglos entfernbar ist.

Es versteht sich, dass zwischen einer Handbetätigungseinrichtung und einem Schlittenantrieb eines erfindungsgemäßen Lastenträgers, z.B. zwischen der Handbetätigungseinrichtung 176 und dem Antrieb 133d, auch eine Kraftübertragungseinrichtung vorgesehen sein kann, die z.B. eine insbesondere flexible Welle, ein Getriebe, insbesondere ein Seilzuggetriebe, oder dergleichen umfassen kann.

Die Handbetätigungseinrichtung 176 kann beispielsweise im Gepäckabteil 85, jedenfalls im Innenraum des Fahrzeugs 80, angeordnet sein. Beispielsweise sind zwischen einer erfindungsgemäß vorgesehenen Handbetätigungseinrichtung, z.B. der Handbetätigungseinrichtung 176, und dem zu betätigenden Schlittenantrieb, hier dem Schlittenantrieb 133d, Steckmittel und/oder Rastmittel vorhanden, so dass die Handbetätigungseinrichtung ohne Werkzeug mit dem Schlittenantrieb verbunden werden kann.

Auch beim manuell funktionierenden Schlittenantrieb 133d sind die Vorteile der Erfindung vorhanden. Beispielsweise ist eine Antriebskraft geringer, die ein Bediener aufwenden muss, wenn er ein beim Schlittenantrieb 133d vorhandenes Übersetzungsgetriebe nutzen kann. Weiterhin ist es möglich, dass beispielsweise aufgrund einer selbsthemmenden Eigenschaft der Spindel 172 (selbsthemmende Steigung) eine zusätzliche Halteeinrichtung entbehrlich ist. Der Schlitten 12' bleibt also auch ohne zusätzliche Verriegelung oder Verklemmung an Ort und Stelle.

## Patentansprüche

1. Lastenträger für ein Fahrzeug (80), insbesondere einen Personenkraftwagen, mit einer Schlitten-Führungsbasis (11) zur Montage an einer Lastenträgeraufnahme (87) des Fahrzeugs (80) und mit einem an der Schlitten-Führungsbasis (11) geführten, zwischen einer Ruhestellung (R) und einer Gebrauchsstellung (G) verstellbaren Schlitten (12), wobei der Schlitten (12) in der Gebrauchsstellung (G) bei am Fahrzeug (80) montiertem Lastenträger zum Tragen einer Last vor ein Heck (83) des Fahrzeugs (80) vorsteht, wobei der Lastenträger einen insbesondere mit einem Schlittenantriebsschalter (50a; 50b) schaltbaren elektrischen oder fluidischen und/oder einen manuell betätigbaren Schlittenantrieb (133a-133d) zum Verstellen des Schlittens (12) in die Gebrauchsstellung (G) und/oder die Ruhestellung (R) aufweist, **dadurch gekennzeichnet, dass** dass er eine mindestens ein Halteglied (37) aufweisende Halteeinrichtung (30a; 30b) aufweist, die in einer Haltestellung den Schlitten (12) in mindestens einer Stellung bezüglich der Schlitten-Führungsbasis (11) hält und in einer Freigabestellung den Schlitten (12) zu einer Verstellung bezüglich der Schlitten-Führungsbasis (11) freigibt, wobei die Halteeinrichtung (30a; 30b) einen mit dem Schlittenantriebsschalter und/oder einem Halteantriebsschalter (50a; 50b) schaltbaren elektrischen oder fluidischen Halteantrieb (33a; 33b) zum Verstellen des mindestens einen Halteglieds (37) in die Haltestellung und/oder die Freigabestellung aufweist.

2. Lastenträger nach Anspruch 1, **dadurch gekennzeichnet, dass** der Schlittenantrieb (133a-133d) mittels einer Handbetätigungseinrichtung (176) betätigbar ist und/oder dass der Schlittenantrieb (133a-133d) ein insbesondere selbsthemmendes Getriebe aufweist, wobei das Getriebe zweckmäßigerweise eine Zahnschienenanordnung (135) und/oder einen Spindeltrieb (140) und/oder ein Seilzugetriebe und/oder ein Kettengetriebe (153) umfasst.

3. Lastenträger nach einem der vorhergehenden Ansprüche, **dadurch gekennzeichnet, dass** die Schlitten-Führungsbasis (11) Führungsschienen (15) aufweist, an denen Läuferschienen (18) des Schlittens (12) geführt sind, wobei der Schlittenantrieb (133a-133d) zweckmäßigerweise symmetrisch mit beiden Läuferschienen (18) wirkverbunden ist oder zentral mit dem Schlitten (12), insbesondere quermittig, verbunden ist, und/oder dass der Schlittenantrieb (133a-133d) mittig und/oder etwa symmetrisch bezüglich einer Quermitte des Schlittens (12) auf den Schlitten (12) wirkt.

4. Lastenträger nach einem der vorhergehenden Ansprüche, **dadurch gekennzeichnet, dass** das mindestens eine Halteglied (37) einen Riegel (32) und/oder ein Formschlussglied zu einem Formschluss mit einer Formschlussgegenkontur und/oder ein Spannelement zum Verklemmen oder Verspannen des Schlittens (12) bezüglich der Schlitten-Führungsbasis (11) aufweist oder bildet und/oder dass das mindestens eine Halteglied (37) mindestens eine der Führungsschienen (15) und/oder mindestens eine der Läuferschienen (18) in der Haltestellung durchgreift und/oder einen Längsanschlag für mindestens eine der Läuferschienen (18) bildet.

5. Lastenträger nach einem der vorhergehenden Ansprüche, **dadurch gekennzeichnet, dass** der Schlittenantriebsschalter durch den Halteantriebsschalter (50a; 50b) gebildet ist oder umgekehrt oder dass der Schlittenantriebsschalter und/oder der Halteantriebsschalter (50a; 50b) parallel oder hintereinander geschaltet sind.

6. Lastenträger nach einem der vorhergehenden Ansprüche, **dadurch gekennzeichnet, dass** der Schlittenantriebsschalter und/oder der Halteantriebsschalter (50a; 50b) zur Anordnung in einem Außenbereich des Fahrzeug (80) ausgestaltet ist.

7. Lastenträger nach einem der vorhergehenden Ansprüche, **dadurch gekennzeichnet, dass** der Schlittenantriebsschalter und/oder der Halteantriebsschalter (50a; 50b) an dem Schlitten (12), insbesondere hinter oder an einem Kennzeichenträger (13), angeordnet ist oder eine Halterung zur Befestigung am Heck (83) des Fahrzeugs (80) aufweist, wobei die Halterung vorteilhaft einen Bestandteil eines Heckstoßfängers (86) des Fahrzeugs (80) bildet oder zur Anordnung an dem Heckstoßfänger (86) ausgestaltet ist.

8. Lastenträger nach einem der vorhergehenden Ansprüche, **dadurch gekennzeichnet, dass** er einen Empfänger (56) zur drahtlosen Ansteuerung (52) des Schlittenantriebsschalters und/oder des Halteantriebsschalters (50a; 50b) oder als Bestandteil des Schlittenantriebsschalters und/oder des Halteantriebsschalters (50a; 50b) aufweist, wobei der Empfänger (56) vorteilhaft einen im Wesentlichen auf die Umgebung des Lastenträgers, insbesondere auf 50cm bis 200cm, begrenzten Empfangsbereich (58) aufweist.

9. Lastenträger nach einem der vorhergehenden Ansprüche, **dadurch gekennzeichnet, dass** er eine Steuerung (52) aufweist, die den Schlittenantrieb (133a-133d) zum Verstellen des Schlittens (12) in die Gebrauchsstellung (G) oder die Ruhestellung (R) periodisch abhängig von einer Erstbetätigung durch den Schlittenantriebsschalter in die Gebrauchsstellung (G) oder die Ruhestellung (R) wiederholt in der Art eines Nachtaktens zu einer Betätigung in die Gebrauchsstellung (G) oder die Ruhestellung (R) mit Energie versorgt, insbesondere bestromt.

10. Lastenträger nach einem der vorhergehenden Ansprüche, **dadurch gekennzeichnet, dass** er eine Steuerung (52) zur Aktivschaltung und/oder Deaktivierung des Halteantriebs (33a; 33b) und/oder des Schlittenantriebs (133a-133d) und/oder des Schlittenantriebsschalters und/oder des Halteantriebsschalters (50a; 50b) anhand mindestens einer Aktivierungsbedingung aufweist.

11. Lastenträger nach Anspruch 10, **dadurch gekennzeichnet, dass** die Steuerung (52) den Schlittenantriebsschalter und/oder den Halteantriebsschalter (50a; 50b) und/oder den Halteantrieb (33a; 33b) und/oder den Schlittenabtrieb anhand der mindestens einen Aktivierungsbedingung für ein Zeitintervall aktiv schaltet, wobei der Halteantrieb (33a; 33b) in dem Zeitintervall durch den Schlittenantriebsschalter und/oder den Halteantriebsschalter (50a; 50b) startbar ist und/oder dass die Steuerung (52) einen Sensoreingang und/oder einen Sensor aufweist und zur Auswertung eines Sensorsignals des Sensors als Aktivierungsbedingung ausgestaltet ist und/oder dass die mindestens eine Aktivierungsbedingung ein Unterschreiten einer Grenzgeschwindigkeit des Fahrzeugs (80), insbesondere ein Stillstand des Fahrzeugs (80), und/oder einen Stillstand eines Fahrzeug-Motors (83) des Fahrzeugs (80) und/oder eine Bedingung "Fahrzeugtüren-Entriegelt (32)" und/oder "Heckklappe-Entriegelt" umfasst und/oder dass die mindestens eine Aktivierungsbedingung eine Bestromung einer Leuchte (93-95) des Fahrzeugs (80) und/oder des Lastenträgers umfasst und/oder dass die mindestens eine Aktivierungsbedingung ein von einem Freigabeschalter (55a-55c) sendbares Freigabesignal ist, wobei der Freigabeschalter (55a-55c) vorteilhaft im Innenraum des Fahrzeugs (80), insbesondere an einem Cockpit des Fahrzeugs (80) oder in einem Gepäckabteil (85) des Fahrzeugs (80) , anordenbar ist und/oder einen an einem Fahrzeugschlüssel (91) für das Fahrzeug (80) oder in einem Schlüsselanhängergehäuse angeordneten Sender umfasst, und dass der Lastenträger einen Funkempfänger (56) zum Empfang des Freigabesignals umfasst.

12. Lastenträger nach einem der vorhergehenden Ansprüche, **dadurch gekennzeichnet, dass** er mindestens eine optische und/oder akustische Funktionsanzeigeeinrichtung (88) für mindestens eine Funktionsanzeige des Schlittenantriebs (133a-133d) und/oder der Halteeinrichtung (30a; 30b) aufweist und/oder mindestens einen Signalausgang (53) zur Ansteuerung einer Funktionsanzeigeeinrichtung (88) des Fahrzeugs (80) aufweist.

13. Lastenträger nach einem der vorhergehenden Ansprüche, **dadurch gekennzeichnet, dass** der Schlittenantrieb zum Verstellen mindestens eines an dem Schlitten (12) angeordnetes Lastengtragteil bildet.

## Claims

1. Load carrier for a motor vehicle (80), in particular a car, comprising a slide guide base (11) for mounting on a load carrier mount (87) of the vehicle (80) and a slide (12) guided on the slide guide base (11) and movable between an inoperative position (R) and a position of use (G), wherein the slide (12) projects in front of a rear end (83) of the vehicle (80) in the position of use (G) if the load carrier is mounted on the vehicle (80) for carrying a load, wherein the load carrier comprises an electric or fluidic and/or manually operated slide drive (133a-133d) which is in particular switchable by means of a slide drive switch (50a; 50b) for moving the slide (12) into the position of use (G) and/or into the inoperative position (R), **characterised in that** it comprises a holding device (30a; 30b) having at least one holding element (37), which holding device (30a; 30b) holds the slide (12) in a holding position in at least one position relative to the slide guide base (11) and releases the slide (12) in a release position for adjustment relative to the slide guide base (11), wherein the holding device (30a; 30b) comprises an electric or fluidic holding drive (33a; 33b) switchable by means of the slide drive switch and/or a holding drive switch (50a; 50b) for moving the at least one holding element (37) into the holding position and/or the release position.

2. Load carrier according to claim 1, **characterised in that** the slide drive (133a-133d) can be actuated by means of a manual actuating device (176), and/or **in that** the slide drive (133a-133d) has an in particular self-locking gear mechanism, the gear mechanism expediently comprising a toothed rail arrangement (135) and/or a spindle drive (140) and/or a cable drive and/or a chain drive (153).

3. Load carrier according to any of the preceding claims, **characterised in that** the slide guide base (11) comprises guide rails (15) on which running rails (18) of the slide (12) are guided, wherein the slide drive (133a-133d) is expediently connected actively to the two running rails (18) in a symmetrical arrangement or is centrally connected to the slide (12), in particular centrally in the transverse direction, and/or **in that** the slide drive (133a-133d) acts on the slide (12) centrally and/or approximately symmetrically with respect to a transverse centre of the slide (12).

4. Load carrier according to any of the preceding claims, **characterised in that** the at least one holding element (37) comprises or forms a latch (32) and/or a positive locking element for a positive engagement with a mating positive locking contour and/or a clamping element for clamping the slide (12) relative to the slide guide base (11), and/or **in that** the at least one holding element (37) penetrates at least one of the guide rails (15) and/or at least one of the running rails (18) in the holding position and/or forms a longitudinal stop for at least one of the running rails (18).

5. Load carrier according to any of the preceding claims, **characterised in that** the slide drive switch is represented by the holding drive switch (50a; 50b) or vice versa, or **in that** the slide drive switch and/or the holding drive switch (50a; 50b) are connected in parallel or one behind the other.

6. Load carrier according to any of the preceding claims, **characterised in that** the slide drive switch and/or the holding drive switch (50a; 50b) is/are designed for mounting in an external region of the vehicle (80).

7. Load carrier according to any of the preceding claims, **characterised in that** the slide drive switch and/or the holding drive switch (50a; 50b) is/are mounted on the slide (12), in particular behind or on a licence plate bracket (13), or comprise(s) a holder for mounting on the read end (83) of the vehicle (80), the holder expediently forming a part of a rear bumper (86) of the vehicle (80) or being designed for mounting on the rear bumper (86).

8. Load carrier according to any of the preceding claims, **characterised in that** it comprises a receiver (56) for the wireless selection (52) of the slide drive switch and/or the holding drive switch (50a; 50b) or acting as a part of the slide drive switch and/or of the holding drive switch (50a; 50b), wherein the receiver (56) expediently has a reception range (58) which is substantially limited to the surroundings of the load carrier, being in particular limited to 50 cm to 200 cm.

9. Load carrier according to any of the preceding claims, **characterised in that** it comprises a control unit (52) which repeatedly and periodically supplies energy, in particular electric power, to the slide drive (133a-133d) for moving the slide (12) into the position of use (G) and or the inoperative position (R), as a function of an initial actuation by the slide drive switch into the position of use (G) and or the inoperative position (R) in the manner of a post-cycling process for an actuation into the position of use (G) and or the inoperative position (R).

10. Load carrier according to any of the preceding claims, **characterised in that** it comprises a control unit (52) for activating and/or deactivating the holding drive (33a; 33b) and/or the slide drive (133a-133d) and/or the slide drive switch and/or the holding drive switch (50a; 50b) on the basis of at least one activation condition.

11. Load carrier according to claim 10, **characterised in that** the control unit (52) activates the slide drive switch and/or the holding drive switch (50a; 50b) and/or the holding drive (33a; 33b) and/or the slide drive on the basis of the at least one activation condition for a time interval, wherein the holding drive (33a; 33b) can in this time interval be started by the slide drive switch and/or the holding drive switch (50a; 50b), and/or **in that** the control unit (52) comprises a sensor input and/or a sensor and is designed for evaluating a sensor signal of the sensor as an activation condition, and/or **in that** the at least one activation condition includes a falling below a limit speed of the vehicle (80), in particular a stop of the vehicle (80), and/or a stop of the vehicle engine (83) of the vehicle (80) and/or a condition "vehicle door unlocked (32)" or "tailgate unlocked", and/or **in that** the at least one activation condition includes the power supply to a lamp (93-95) of the vehicle (8-) and/or of the load carrier, and/or **in that** the at least one activation condition is an enabling signal which can be transmitted by an enabling switch (55a-55c), wherein the enabling switch (55a-55c) can advantageously be located in the interior of the vehicle (80), in particular on a cockpit of the vehicle (80) or in a boot (85) of the vehicle (80), and/or comprises a transmitter located on a vehicle key (91) for the vehicle (80) or in a key fob housing, and **in that** the load carrier comprises a radio receiver (56) for receiving the enabling signal.

12. Load carrier according to any of the preceding claims, **characterised in that** it comprises at least one visual and/or acoustic function display device (88) for at least one function display of the slide drive (133a-133d) and/or of the holding device (30a; 30b) and/or at least one signal output (53) for selecting a function display device (88) of the vehicle (80).

13. Load carrier according to any of the preceding claims, **characterised in that** the slide drive forms a drive for moving at least one load carrier component mounted on the slide (12).

## Revendications

1. Support de charges pour un véhicule (80), en particulier pour une voiture particulière, comprenant une base de guidage de chariot (11) destinée à être montée au niveau d'un logement de support de charges (87) du véhicule (80) et comprenant un chariot (12) guidé au niveau de la base de guidage de chariot (11) et pouvant être déplacé entre une position de repos (R) et une position d'utilisation (G), sachant que le chariot (12) fait saillie, dans la position d'utilisation (G), d'une partie arrière (83) du véhicule (80) lorsque le support de charges servant à supporter une charge est monté sur le véhicule (80), sachant que le support de charges présente un entraînement de chariot (133a-133d) servant à déplacer le chariot (12) dans la position d'utilisation (G) et/ou dans la position de repos (R), lequel est électrique ou fluidique et peut être commuté à l'aide d'un commutateur d'entraînement de chariot (50a ; 50b) et/ou peut être actionné manuellement, **caractérisé en ce qu'**il présente un système de retenue (30a ; 30b) présentant au moins un organe de retenue (37), lequel système de retenue retient dans une position de retenue le chariot (12) dans au moins une position par rapport à la base de guidage de chariot (11) et libère le chariot (12) dans une position de libération aux fins d'un déplacement par rapport à la base de guidage de chariot (11), sachant que le système de retenue (30a ; 30b) présente un entraînement de retenue (33a ; 33b) électrique ou fluidique servant à déplacer l'organe de retenue (37) au moins au nombre de un dans la position de retenue et/ou dans la position de libération, ledit entraînement de retenue électrique ou fluidique pouvant être commuté avec le commutateur d'entraînement de chariot et/ou avec un commutateur d'entraînement de retenue (50a ; 50b).

2. Support de charges selon la revendication 1, **caractérisé en ce que** l'entraînement de chariot (133a-133d) peut être actionné au moyen d'un système d'actionnement manuel (176), et/ou **en ce que** l'entraînement de chariot (133a-133d) présente un engrenage notamment autobloquant, sachant que l'engrenage comprend de manière appropriée un ensemble de glissières dentées (135) et/ou un mécanisme à broche (140) et/ou un engrenage à câble de commande et/ou un engrenage à chaîne (153).

3. Support de charges selon l'une quelconque des revendications précédentes, **caractérisé en ce que** la base de guidage de chariot (11) présente des rails de guidage (15), au niveau desquels sont guidés des rails de roulement (18) du chariot (12), sachant que l'entraînement de chariot (133a - 133d) coopère de manière appropriée de manière symétrique avec les deux rails de roulement (18) ou est relié de manière centrale, en particulier de manière centrée transversalement, au chariot (12), et/ou **en ce que** l'entraînement de chariot (133a - 133d) agit, de manière centrée et/ou de manière approximativement symétrique par rapport à un milieu transversal du chariot (12), sur le chariot (12).

4. Support de charges selon l'une quelconque des revendications précédentes, **caractérisé en ce que** l'organe de retenue (37) au moins au nombre de un présente ou forme un verrou (32) et/ou un organe de complémentarité de forme aux fins d'un assemblage par complémentarité de forme avec un contour complémentaire de complémentarité de forme et/ou un élément de serrage servant à coincer ou à bloquer le chariot (12) par rapport à la base de guidage de chariot (11), et/ou **en ce que** l'organe de retenue (37) au moins au nombre de un traverse dans la position de retenue au moins un des rails de guidage (15) et/ou au moins un des rails de roulement (18) et/ou forme une butée longitudinale pour au moins un des rails de roulement (18).

5. Support de charges selon l'une quelconque des revendications précédentes, **caractérisé en ce que** le commutateur d'entraînement de chariot est formé par le commutateur d'entraînement de retenue (50a ; 50b) ou inversement, ou **en ce que** le commutateur d'entraînement de chariot et/ou le commutateur d'entraînement de retenue (50a ; 50b) sont montés en parallèle ou l'un derrière l'autre.

6. Support de charges selon l'une quelconque des revendications précédentes, **caractérisé en ce que** le commutateur d'entraînement de chariot et/ou le commutateur d'entraînement de retenue (50a ; 50b) sont configurés pour être agencés dans une zone extérieure du véhicule (80).

7. Support de charges selon l'une quelconque des revendications précédentes, **caractérisé en ce que** le commutateur d'entraînement de chariot et/ou le commutateur d'entraînement de retenue (50a ; 50b) sont disposés au niveau du chariot (12), en particulier à l'arrière d'un support d'immatriculation (13) ou au niveau de ce dernier ou présente une fixation destinée à être fixée au niveau de la partie arrière (83) du véhicule (80), sachant que la fixation forme de manière avantageuse une composante d'un pare-chocs arrière (86) du véhicule (80) ou est configurée pour être disposée au niveau du pare-chocs arrière (86).

8. Support de charges selon l'une quelconque des revendications précédentes, **caractérisé en ce qu'**il présente un récepteur (56) servant à commander (52) sans fil le commutateur d'entraînement de chariot et/ou le commutateur d'entraînement de retenue (50a ; 50b) ou comme composante du commutateur d'entraînement de chariot et/ou du commutateur d'entraînement de retenue (50a ; 50b), sachant que le récepteur (56) présente de manière avantageuse une zone de réception (58) limitée essentiellement à l'environnement du support de charges, en particulier à 50 cm à 200 cm.

9. Support de charges selon l'une quelconque des revendications précédentes, **caractérisé en ce qu'**il présente une commande (52) qui alimente en énergie, en particulier en électricité, l'entraînement de chariot (133a-133d), servant à déplacer le chariot (12) dans la position d'utilisation (G) ou dans la position de repos (R), de manière périodique en fonction d'un premier actionnement par le commutateur d'entraînement de chariot dans la position d'utilisation (G) ou dans la position de repos (R), de manière répétée à la manière d'un repositionnement, aux fins d'un actionnement dans la position d'utilisation (G) ou dans la position de repos (R).

10. Support de charges selon l'une quelconque des revendications précédentes, **caractérisé en ce qu'**il présente une commande (52) servant à la commutation active et/ou à la désactivation de l'entraînement de retenue (33a ; 33b) et/ou de l'entraînement de chariot (133a-133b) et/ou du commutateur d'entraînement de chariot et/ou du commutateur d'entraînement de retenue (50a ; 50b) à l'aide au moins d'une condition d'activation.

11. Support de charges selon la revendication 10, **caractérisé en ce que** la commande (52) commute de manière active pour une période de temps donnée le commutateur d'entraînement de chariot et/ou le commutateur d'entraînement de retenue (50a ; 50b) et/ou l'entraînement de retenue (33a ; 33b) et/ou la sortie de chariot à l'aide de la condition d'activation au moins au nombre de une, sachant que l'entraînement de retenue (33a ; 33b) peut être démarré dans la période de temps définie par le commutateur d'entraînement de chariot et/ou par le commutateur d'entraînement de retenue (50a ; 50b), et/ou **en ce que** la commande (52) présente une entrée de capteur et/ou un capteur et est configurée aux fins de l'analyse d'un signal de capteur du capteur en tant que condition d'activation, et/ou **en ce que** la condition d'activation au moins au nombre de une comprend une valeur inférieure à une vitesse limite du véhicule (80), en particulier un arrêt du véhicule (80), et/ou un arrêt d'un moteur du véhicule (83) du véhicule (80) et/ou une condition « déverrouillage des portes de véhicule (32) » et/ou « déverrouillage du hayon arrière », et/ou **en ce que** la condition d'activation au moins au nombre de une comprend une alimentation en électricité d'un phare (93-95) du véhicule (80) et/ou du support de charges, et/ou **en ce que** la condition d'activation au moins au nombre de une est un signal de libération pouvant être émis par un commutateur de libération (55a-55c), sachant que le commutateur de libération (55a-55c) peut être disposé de manière avantageuse dans l'habitacle du véhicule (80), en particulier au niveau d'un poste de conduite du véhicule (80) ou dans un compartiment à bagages (85) du véhicule (80) et/ou comprend un émetteur disposé au niveau d'une clé de véhicule (91) pour le véhicule (80) ou dans un boîtier d'accrochage de clés, et **en ce que** le support de charges comprend un récepteur radio (56) servant à recevoir le signal de libération.

12. Support de charges selon l'une quelconque des revendications précédentes, **caractérisé en ce qu'**il présente au moins un système d'affichage de fonctions (88) optique et/ou acoustique pour au moins un affichage de fonctions de l'entraînement de chariot (133a-133d) et/ou du dispositif de retenue (30 ; 30b) et/ou présente au moins une sortie de signal (53) servant à la commande d'un système d'affichage de fonctions (88) du véhicule (80).

13. Support de charges selon l'une quelconque des revendications précédentes, **caractérisé en ce que** l'entraînement de chariot forme un entraînement servant à déplacer au moins une partie de support de charges disposée au niveau du chariot (12).
